# EUROPEAN PATENT SPECIFICATION

(11) **EP 2 038 643 B1**
(45) Date of publication and mention of the grant of the patent: **18.10.2017**
(21) Application number: 07786779.4
(22) Date of filing: 20.06.2007
(51) Int. Cl.: G01N 27/447

(54) **METHOD AND DEVICE FOR SEPARATION AND DEPLETION OF CERTAIN PROTEINS AND PARTICLES USING ELECTROPHORESIS**
VERFAHREN UND VORRICHTUNG ZUR TRENNUNG UND ABREICHERUNG BESTIMMTER PROTEINE UND PARTIKEL MITTELS ELEKTROPHORESE
PROCÉDÉ ET DISPOSITIF POUR LA SÉPARATION ET L'APPAUVRISSEMENT DE CERTAINES PROTÉINES ET PARTICULES À L'AIDE D'UNE ÉLECTROPHORÈSE

(30) Priority: 20.06.2006 US 805248 P; 04.08.2006 US 821491 P
(43) Date of publication of application: 25.03.2009
(73) Proprietor: Becton Dickinson and Company, Franklin Lakes, NJ 07417 (US)
(72) Inventor: WEBER, DR., Gerhard, 82152 Planegg (DE)
(74) Representative: Eder, Michael
(86) International application number: PCT/EP2007/056167
(87) International publication number: WO 2007/147862

(56) References cited:
- WO-A-01/68225
- WO-A-01/86279
- WO-A-03/060504
- HOFFMANN PETER ET AL: "Continuous free-flow electrophoresis separation of cytosolic proteins from the human colon carcinoma cell line LIM 1215: A non two-dimensional gel electrophoresis-based proteome analysis strategy" PROTEOMICS, vol. 1, no. 7, July 2001 (2001-07), pages 807-818, XP002456964 ISSN: 1615-9853
- PIER GIORGIO RIGHETTI ET AL: "How to Bring the Unseen Proteome to the Limelight via Electrophoretic Pre-Fractionation Techniques" BIOSCIENCE REPORTS, KLUWER ACADEMIC PUBLISHERS-PLENUM PUBLISHERS, NE, vol. 25, no. 1-2, 1 February 2005 (2005-02-01), pages 3-17, XP019274411 ISSN: 1573-4935
- KRIVANKOVA L ET AL: "CONTINUOUS FREE-FLOW ELECTROPHORESIS" ELECTROPHORESIS, WILEY-VCH VERLAG, WEINHEIM, DE, vol. 19, 1998, pages 1064-1074, XP008008219 ISSN: 0173-0835 cited in the application

## Description

### Field of the Invention

The invention relates to methods and an apparatus for continuous, carrier-free deflection electrophoresis involving separation conditions and media that enable the separation and possible depletion of certain analytes having a distinct pI.

### Background of the Invention

Electrophoresis is a well-established technology for separating particles based on the migration of charged particles under the influence of a direct electric current. Several different operation modes such as isoelectric focusing (IEF), zone electrophoresis (ZE) and isotachophoresis (ITP) have been developed as variants of the above separation principle and are generally known to those of skill in the art.

Among electrophoretic technologies, free flow electrophoresis (FFE) is one of the most promising [Krivanova L. & Bocek P. (1998), "Continuous free-flow electrophoresis", Electrophoresis 19: 1064-1074]. FFE is a technology wherein the separation of the analytes occurs in a carrier-free medium, i.e., a liquid (aqueous) medium in the absence of a stationary phase (or solid support material) to minimize sample loss by adsorption. FFE is often referred to as carrier-less deflection electrophoresis or matrix-free deflection electrophoresis.

In the field of proteomics, FFE is the technology of choice for the defined pre-separation of complex protein samples in terms of their varying isoelectric point (pI) values. Using FFE, a great variety of analytes, including organic and inorganic molecules, bioparticles, biopolymers and biomolecules can be separated on the basis of their electrophoretic mobility. The corresponding principles have already been described [e.g. Bondy B. et al. (1995), "Sodium chloride in separation medium enhances cell compatibility of free-flow electrophoresis", Electrophoresis 16: 92-97].

The process of FFE has been improved, e.g., by way of stabilization media and counter-flow media. This is reflected, for example, in U.S. Patent 5,275,706. According to this patent, a counter-flow medium is introduced into the separation space counter to the continuous flow direction of the bulk separation medium and sample that travels between the electrodes. Both media (separation media and counter flow media) are discharged or eluted through fractionation outlets, typically into a micro titer plate, resulting in a fractionation process having a low void volume. Additionally, a laminar flow of the media in the region of the fractionation outlets is maintained (i.e., with very low or no turbulence).

A particular FFE technique referred to as interval FFE is disclosed, for example, in U.S. Patent 6,328,868. In this patent, the sample and separation medium are both introduced into an electrophoresis chamber, and the analytes in the sample are separated using an electrophoresis mode such as ZE, IEF or ITP, and are finally expelled from the chamber through fractionation outlets. Embodiments of the '868 patent describe the separation media and sample movement to be unidirectional, traveling from the inlet end towards the outlet end of the chamber, with an effective voltage applied causing electrophoretic migration to occur while the sample and media are not being fluidically driven from the inlet end towards the outlet end, in contrast to the technique commonly used in the art wherein the sample and media pass through the apparatus while being separated in an electrical field (commonly referred to as continuous FFE).

International patent application WO 02/50524 discloses an electrophoresis method employing an apparatus with a separation chamber through which the separation media flows and which provides a separation space defined by a floor and a cover and spacers separating these two from each other. In addition, this FFE apparatus encompasses a pump for supplying the separation medium, which enters the separation chamber via medium feed lines, and leaves the chamber via outlets. The FFE apparatus also includes electrodes for applying an electric field within the separation medium and sample injection points for adding the mixture of particles or analytes and fractionation points for removing the particles separated by FFE in the separation medium. The separated particles can be used for analytic purposes or for further preparative processing. In any case, the application does not disclose the composition of any separation media.

U.S. patent application 2004/050698 also discloses a free flow electrophoresis apparatus which encompasses at least one separation chamber through which a separation medium can flow. Furthermore, said FFE apparatus encompasses a dosage pump for conveying a separation medium which enters the separation chamber by way of medium feed lines and leaves said chamber by way of outlets, electrodes for applying an electric field in the separation medium and sample injection points for adding a mixture of particles to be separated and fractionation points for removing the particles in the separation medium separated by means of FFE.

A number of separation media for the separation of analytes such as bioparticles and biopolymers are known in the art. For example, the book "Free-flow Electrophoresis", published by K. Hannig and K. H. Heidrich, (ISBN 3-921956-88-9) reports a list of separation media suitable for FFE and in particular for free flow ZE (FF-ZE).

U.S. patent 5,447,612 (to Bier et al.) discloses another separation medium which is a pH buffering system for separating analytes by isoelectric focusing by forming functionally stable pre-cast narrow pH zone gradients in free solution. It employs buffering components in complementary buffer pairs. The buffers components are selected from among simple chemically defined ampholytes, weak acids and weak bases, and are paired together on the basis of their dissociation characteristics so as to provide a rather flat pH gradient of between 0.4 to 1.25 pH units.

IEF (isoelectric focusing), one of the above general operation modes of electrophoresis, including free flow electrophoresis, is a technique commonly employed, e.g., in protein characterization as a mechanism to determine a protein's isoelectric point (see, e.g., Analytical Biochemistry, Addison Wesley Longman Limited-Third Edition, 1998). Zone electrophoresis (ZE) is another alternative operation mode based on the difference between the electrophoretic mobility value of the particles to be separated and the charged species of the separation medium employed.

IEF involves passing a mixture through a separation medium which contains, or which may be made to contain, a pH gradient. A separation chamber has a relatively low pH at one side, while at the other side it has a relatively higher pH. Between these sides, a developed pH gradient is formed that governs the electrophoretic movement of charged particles. IEF is discussed in various texts such as Isoelectric Focusing by P. G. Righetti and J. W. Drysdale (North Holland Publ., Amsterdam, and American Elsevier Publ., New York, 1976).

Proteomics research combines high-resolution separation techniques applied to complex protein mixtures with state-of-the-art identification methods such as mass spectrometry (MS). It is generally agreed that none of the existing separation and identification methodologies on its own can give a full account of the protein composition or the protein expression in complex mixtures, (e.g. biological fluids such as serum, plasma, synovial fluid, cerebrospinal fluid, urine, whole cells, cell fractions, or tissue extracts). This limitation, however, has not prevented the use of existing methods (or the combination of several existing technologies) to provide valuable information on a wide range of proteins, especially when either their absence or presence, or their level of expression can be correlated to a disease state. One strategy for the search of protein biomarkers includes the direct searching in the peripheral fluids of the body where the marker concentration is expected to be relatively low and today's detection methods cause their identification to be difficult to achieve.

The biggest hurdle to overcome in the discovery phase of protein biomarkers is the fact that the analytical tools used at the end of the process chain such as mass spectrometry (MS) or gel electrophoresis have a definite detection limit for finite amounts of proteins (or peptides derived therefrom). To fully exploit the sensitivity limits for peptide identification by MS or gel electrophoresis, it is necessary to enrich the protein mixture for the potential marker candidate. To this end, the concentration of abundant proteins present in complex peripheral fluids such as serum or plasma has to be reduced as much as possible.

Serum and plasma both contain high levels of proteins that may obfuscate the detection of lower abundant proteins. High abundant proteins to be separated from further analytes of a sample having a distinct pI are, e.g., albumin, transferrin, alpha-macroglobulin, antitrypsin, haptoglobulin. Other high abundant proteins present in samples of biological origin may include actin, casein or myosin.

In Serum, for example, the seven most abundant proteins include albumin, immunoglobulins (both, IgGs and IgAs), transferrin, alpha-macroglobulin, antitrypsin, and haptoglobulin. Together, these seven proteins comprise to some 97% of the total serum proteins. If one adds up the 30 most abundant proteins present in a concentration of >100 µg/ml serum and assuming an average total protein content of some 80 mg/ml serum, then these "non-target" proteins or analytes amount to about 99% of the total proteins in serum, leaving just 1% of all proteins present as prime targets for the identification of novel serum markers. Assuming that the markers of interest are not bound or complexed to one of those major proteins, then the non-target proteins must be removed early in the process in order to reduce the complexity of analysis such as MS.

Albumin alone may encompass 60% of the total protein present in serum samples. The high concentration of albumin obscures the detection of low abundance serum proteins. Albumin in serum samples distorts lanes in polyacrylamide gels if the amount of protein added to the sample well is increased to enable detection of low abundant proteins. Albumin, a 66 kDa protein, also tends to mask other proteins that migrate around 50 - 70 kDa because it runs as a heavy band obscuring the less abundant proteins.

Taking albumin having a typical concentration of about 50 mg/ml as an example, if any purification methodology were able to remove 99.9% of albumin from the serum, the remaining (contaminating) concentration of albumin would still be 50 µg/ml or a factor 50,000 higher than well-known tumor markers such as the prostate-specific antigen present in about 1 ng/ml.

Interest in proteomic analysis of human serum has been greatly elevated during the past several years. In some areas of research, proteomic analysis of human serum represents an extreme challenge due to the dynamic range of the proteins or analytes of interest. In serum, the quantities of proteins and peptides of interest range from those considered "high abundance", present at 2-60% by mass of total protein, to those present at 10⁻¹² % or less. This range of analytical target molecules is in many cases outside the realm of available technologies for efficient and effective proteomic analysis.

Major investments have recently been made into the investigation of proteins, more specifically for instance, the human plasma proteome. Essentially, the complexity of the human plasma protein is shown below. There are approximately 300 plasma proteins with essentially 30,000 isoforms, about 10,000 isoforms of immunoglobulins, about 40,000 genes with 500,000 isoforms from tissue derived proteins, and over 5000 peptides. Other analytes of interest include peptide hormones and protein degradation products. Between 6-8% of human blood is protein, of which high abundant proteins encompass over 60% of the total protein composition.

One way to address the complexity of these samples is the application of electrophoretic depletion techniques that enable improved separation and fractionation of samples, including plasma samples, prior to analysis. Historical methods for removal of certain proteins consisted of using common affinity adsorbers based on dyes such as Sepharose Blue®, or affinity adsorbers attached to antibodies for albumin removal. For example, special columns comprising immobilized monoclonal antibodies for removal of albumin have been developed in the art (e.g., a kit available under the name "Qproteome albumin depletion kit" from Qiagen, Germany).

While some of these techniques may be successful for removing albumin or other high abundance proteins, wide-spread applicability of these methods, in particular antibody based affinity chromatographic methods, has been hampered by the rather high costs, and the potential sample loss observed in these methods. Moreover, e.g., the kits and columns available in the art, developed for the depletion of proteins from human plasma, do not work in case of plasma proteins of other mammals because they are typically adapted to a single protein species to be depleted.

In view of the above, there remains a need in the art for other, highly efficient as well as economical depletion methods of, e.g., high abundant proteins such as albumin, particularly for high-throughput applications, for example in the clinical environment for the detection of a desired biomarker from a large number of patients.

Free flow electrophoresis is a well-known technique that is principally capable of avoiding many of the drawbacks experienced with other depletion methods in the art. However, to the best of the inventor's knowledge, successful and reproducible selective depletion methods employing this technique have not been disclosed in the art, not the least because of the lack of information with regard to the conditions that must be provided within separation chamber of an FFE apparatus, as well as the difficulties involved in maintaining sufficiently stable conditions the during electrophoretic separation/depletion of analytes from a sample.

In this context, it is noted that whilst U.S. applications US 2004/050697 and US 2004/050698 to Eckerskorn et al. briefly mention that the free flow electrophoretic methods can also be used for the selective depletion of analytes, nothing is said in these applications how to achieve such a successful and reproducible depletion of a given high abundant protein such as albumin, nor is any guidance given as to the selection of appropriate separation buffer systems, the pH conditions or profiles used, or the stabilizing media required to maintain stable conditions within an FFE apparatus.

Accordingly, it is an object of the present invention to provide methods, kits and devices suitable for depleting analytes and avoiding the drawbacks in the prior art.

### Summary of the Invention

The present inventors have found that the methods, kits and devices provided herein can be successfully used for the selective depletion of high abundance analytes and offer many advantages compared to the available methods in the art. Further advantages and improvements that are provided by the present invention, including improvements to some typical problems experienced when operating in free flow electrophoresis applications run in IEF mode, will be illustrated in more detail in the description of the invention herein below.

Hence, in a first aspect the present invention provides a method for separating an analyte to be separated from a composition of analytes by free flow electrophoresis comprising:
forming within a free flow electrophoresis (FFE) chamber a pH function profile between an anode and a cathode, comprising a pH separation plateau which average pH corresponds essentially to the isoelectric point (pI) of an analyte to be separated and which has a pH range delimited by an upper pH limit and a lower pH limit, and further comprising a pH function between the anode and the pH separation plateau having an average pH lower than the pH of the pH separation plateau and/or a higher electrical conductivity than the pH separation plateau, and a pH function between the cathode and the pH separation plateau having an average pH greater than the pH of the pH separation plateau and/or a higher electrical conductivity than the pH separation plateau; wherein the pH separation plateau and the pH function profiles between the cathode and anode are formed by respective buffer systems;
introducing a sample comprising an analyte having a defined pI to be separated from a mixture of analytes into the FFE chamber wherein the sample can be introduced in the pH separation plateau, in a zone at the anodic side or in a zone at the cathodic side of said pH separation plateau; and
eluting the analytes from the FFE chamber, and optionally recovering all or a portion of the analytes in one or a plurality of fractions; optionally wherein the method further comprises identifying the pI of an analyte to be separated from a composition of analytes prior to the electrophoretic separation in case the pI of said analyte is not known.

In view of the excellent results achieved by the FFE depletion / separation methods of the present invention, all or portions of the recovered analytes may be used in subsequent preparative and/or analytic downstream applications.

Thus, another aspect of the present invention relates to a method for analyzing analytes of a fractionated sample comprising conducting free flow electrophoresis prior to the analysis, wherein the free flow electrophoresis comprises:
separating a sample comprising analytes by free flow electrophoresis in accordance with the method as described above and thereby producing at least one non-depleted sample portion and a sample portion comprising the analyte separated on the pH separation plateau from the non-depleted sample portion; and
subsequently analyzing one or more fractions eluted from the FFE chamber.

In yet another aspect of the present invention, analytes having a distinct pI can be simultaneously separated/depleted from two, or even more than two samples introduced into a single FFE apparatus. Such a method for simultaneously separating one or more analytes to be separated from a composition of analytes from two or more samples by free flow electrophoresis comprises :
forming a pH function profile between a single anode and a single cathode within a free flow electrophoresis (FFE) chamber , wherein the pH function profile between the anode and the cathode of the FFE chamber comprises N separation zones and N-1 inter-electrode stabilizing media separating each separation zone from each adjacent separation zone(s);
wherein each separation zone comprises a pH function profile as defined herein and further wherein each separation zone comprises a pH separation plateau suitable to separate the analyte to be separated from the composition of analytes in said separation zone
individually introducing each sample comprising an analyte to be separated from a composition of analytes into a separation zone of the FFE chamber, and
eluting the analytes from the FFE chamber, and optionally recovering all or a portion of the analytes in one or a plurality of fractions. In case the pI of said analyte to be separated from a composition of analytes is not known, the method may further comprise identifying the pI of said analyte prior to the electrophoretic separation.

N will be an integer of 2 or greater, and is essentially only limited by the design of the FFE apparatus, particularly by the number of distinct media inlets. The number of parallel separations will therefore typically be between 2 and 5, but may at least in principle be even greater so that in certain embodiments even 6, 7, 8, 9, 10, 11, 12, 13, 14 or 15 parallel separations may be performed simultaneously between a single anode and cathode in the FFE apparatus.

The present invention also describes kits comprising the separation media, and, optionally, other media such as focusing media, inter-electrode stabilizing media and/or stabilizing media to carry out the methods according to the present invention.

### Brief Description of the Figures

FIG. 1A is a schematic view of the FFE separation chamber according to an embodiment of the invention, more specifically the depletion and fractionation embodiment of one abundant protein (DFE protocol).
FIG. 1B is a conductivity and pH gradient profile of an embodiment of the present invention shown in FIG. 1A.
FIG. 2 demonstrates a pherogram of experimental results of a protocol according to FIGS. 1A and 1B. The pH separation plateau, called the albumin pool herein, comprises analytes having essentially the same pI as the pH of the pH separation plateau. The acidic pool and the neutral/alkaline pool are situated at the interfaces of the pH separation plateau to the adjacent pH functions.
FIG. 3 demonstrates experimental results of a protocol according to FIGs. 1A, 1B and 2. The figure shows two ID-gels documenting the separation of albumin (around 66 kDa) and proteins having essentially the same pI from proteins recovered at the interfaces to the anodic and cathodic pH function. Lane S shows the sample composition before the electrophoretic separation step.
FIG. 4A is a schematic view of the FFE separation chamber according to an embodiment of the invention, more specifically the depletion and separation embodiment of one abundant protein (DSE protocol).
FIG. 4B is a conductivity and pH gradient profile of an embodiment of the present invention shown in FIG. 4A.
FIG. 5 depicts a pherogram of experimental results of a DSE protocol according to FIGS. 4A and 4B showing the pH values of the eluted fractions and the distribution of pI markers.
FIG. 6 demonstrates an SDS-PAGE analysis of a DSE protocol according to an embodiment of FIGS. 4A and 4B wherein the sample was derived from human plasma. The depletion of albumin from proteins accumulating on the pH gradients adjacent to the pH separation plateau is shown.
FIG. 7 shows a conductivity and pH gradient profile of an embodiment of the present invention using a parallel mode of operation wherein an inter-electrode stabilizing medium is disposed between the two separation zones.
FIG. 8 shows a pherogram of experimental results for a modified parallel DFE protocol for simultaneously separating two different samples in a FFE chamber showing the pH values of the eluted fractions and the distribution of pI markers in the two separation zones.
FIG. 9 demonstrates an SDS-PAGE analysis of the fractions of the first separation zone of a modified parallel DFE protocol according to FIG. 8 wherein the samples were derived from human plasma showing the separation of the first separation zone.
FIG. 10 depicts an SDS-PAGE analysis of the fractions of the second separation zone of a modified parallel DFE protocol according to FIG. 8 wherein the samples were derived from human plasma showing the separation of the second separation zone.

### Detailed Description

The present invention relates to methods and devices for carrying out free flow electrophoretic separations involving media and separation conditions that enable the efficient, selective and reproducible separation of certain analytes. The methods and devices provided herein allow the separation of, e.g., peptides, proteins, protein complexes, polynucleotides and polynucleotide complexes, particularly, but not limited to, under native conditions. Alternatively, the methods may also be carried out under denaturing conditions. The invention may be used, for instance, to improve biomarker discovery, especially for proteins or analytes that are already difficult to detect in view of their low abundance and concentration, and whose detection is furthermore hampered by the existence of high abundant non-marker proteins such as albumin. For example, the presence of albumin in many cellular extracts often makes the detection of proteins which are present in low concentration and abundance difficult or almost impossible.

In such applications, the present invention may be used to selectively separate/isolate high abundant proteins, thereby enabling the analysis of the non-depleted proteins in their native state that historically have been masked by high abundant proteins when analyzed, for instance, by immobilized pH gradient (IPG) gels, 1D or 2D SDS-PAGE.

The methods, devices and compositions/kits according to aspects of the present invention include at least one or more of the following major advantages over other methods known in the art:
(i) higher sample recovery of compounds of interest directly in solution;
(ii) a higher level of resolution of separations;
(iii) an increased dynamic range of detected proteins;
(iv) more rapid high-resolution separation rate due to the charged molecules migrating in solution rather than through denser materials such as gels;
(v) an increased enrichment of low abundant proteins;
(vi) no or limited loss of sample;
(vii) repeated use of the separation device;
(viii) a reduction of non-specific binding of analytes to high abundant proteins;
(ix) a greater flexibility and applicability to a variety of different analytes; and
(x) direct compatibility with downstream analytical techniques, including but not limited to gel electrophoresis (such as 1D- or 2D-PAGE), mass spectroscopy (MS) (such as ESI, MALDI or SELDI), LC-MS(/MS), MALDI-ToF-MS(/MS), chemiluminescence, HPLC, Edman sequencing, NMR spectroscopy, X-ray diffraction, nucleic acid sequencing, electroblotting, amino acid sequencing, flow cytometry, circular dichroism and combinations thereof.

The present invention provides methods, devices (apparatus), and compositions to remove all or a portion of a certain protein, in order to enable better access to low abundant proteins or analytes in a specimen sample. In certain embodiments of the invention, albumin is the protein of choice to be depleted or excluded from analysis in order to better measure or identify lower abundant proteins.

When high abundance proteins are removed or depleted, the relative concentration of other proteins increases. This can be evident as displayed on gel-like images, and as electropherograms for each sample in a tabular format.

Typical analytes that can be separated either as analytes to be depleted or non-depleted analytes, by an FFE method and device according to embodiments of the present invention include inorganic and organic molecules, and preferably bioparticles, biopolymers, biomolecules, including biomarkers such as proteins, protein aggregates, peptides, DNA-protein complexes, DNA, membranes, membrane fragments, lipids, saccharides, polysaccharides, hormones, liposomes, cells, cell organelles, viruses, virus particles, antibodies, chromatin, and the like. Inorganic or organic molecules which can be separated in accordance with certain embodiments of the invention are surface charge-modified polymers and particles such as melamine resins, latex paint particles, polystyrenes, polymethylmethacrylates, dextranes, cellulose derivatives, polyacids, illicit drugs, explosives, toxins, pharmaceuticals, carcinogens, poisons, allergens, infectious agents and the like.

As used herein, "biomarker" refers to naturally occurring or synthetic compounds, which are a marker of a disease state or of a normal or pathologic process that occurs in an organism (e.g., drug metabolism).

The term "protein", as used herein, means any protein, including, but not limited to peptides, enzymes, glycoproteins, hormones, receptors, antigens, antibodies, growth factors, etc., without limitation, with about 20 or more amino acids. Proteins include those comprised of greater than about 20 amino acids, greater than about 50 amino acid residues, or greater than about 100 amino acid residues.

In the context of the present application, the terms "to separate" and "separation" are intended to mean any spatial partitioning of a mixture of two or more analytes based on their different behavior in an electrical field (caused, e.g., by their different pI). Separation therefore includes, but is not limited to fractionation as well as to a specific and selective enrichment or, preferably, depletion, concentration and/or isolation of certain fractions or analytes contained in a sample. Thus, whenever the application refers to the terms "to separate" or "separation", they are intended to include at least one of the foregoing meanings.

Regardless of the above definition of the term "separate" or "separation", certain FFE separation protocols described herein will refer specifically to fractionation (DFE protocol), whereas others will refer to separation (DSE protocol). In this context, it will be appreciated that separation means an additional spatial separation of the analytes in the sample is achieved, whereas the term fractionation indicates that a pool of (non-depleted) analytes can be collected from the FFE separation step. The FFE separation may principally be carried out in a preparative manner so that certain fractions are subsequently collected, or may merely be carried out analytically, where the analyte of interest or its presence in a certain fraction is merely detected by suitable means, but not collected, e.g., for further use.

Depletion of at least one analyte from a sample comprising a plurality of analytes is one of the preferred embodiments of the present invention. Due to an FFE separation step in an apparatus suitable for FFE, proteins/analytes of low concentration can be accumulated in the chemical buffering system in a manner such that the higher abundance proteins/analytes are accumulated or isolated in a location other than where the low concentration proteins/analytes accumulate. The term "depletion" relates to the fact that at least one analyte having a defined pI may be separated from other "non-depleted" analytes by an FFE separation step according to embodiments of the present invention. In other words, an analyte or analytes to be separated (depleted analyte) accumulate on the pH separation plateau which has a pH corresponding to their pI, whereas non-depleted analytes accumulate at the interface between the pH separation function and the adjacent pH functions or accumulate on a pH gradient of the adjacent pH function. Thus, these depleted analytes, typically high abundant proteins, can no longer interfere with, *e.g.,* measuring or analyzing low concentration proteins/analytes, thereby facilitating their detection and identification.

The term "non-depleted" refers to any analyte or sample portion which no longer contains the analyte depleted from the original analyte / sample. In other words, a "non-depleted" sample or sample portion will accumulate at a position within the pH function profile in an FFE apparatus other than where the analyte (or analytes) to be separated accumulates. A non-depleted analyte or a non-depleted sample portion containing a mixture of analytes should therefore be understood to mean that the non-depleted analyte or sample portion is essentially separated, and therefore depleted from a given analyte to be separated from the analyte mixture / sample (for example a high abundant protein/analyte).

The term "analyte to be separated" refers to an analyte or to multiple analytes which should be spatially partitioned by FFE from further analytes contained in a sample. The average pH of a pH separation plateau according to the present invention corresponds essentially to the pI of an analyte to be separated. Such analyte(s) will accumulate on the pH separation plateau, whereas analytes with a pI outside the pH range of the pH separation plateau will accumulate either at the border between the pH separation plateau and an adjacent pH function and/or a pH function comprising a conductivity step.

Alternatively, the non-depleted sample portion is electrophoretically driven away from the pH separation plateau and is further spatially partitioned in an adjacent pH gradient. Analytes having a pI outside the pH range of a pH separation plateau are considered to represent essentially "non-depleted" sample portions due to the fact that they accumulate at a location of a pH function profile other than where the analyte to be separated (e.g., a higher abundant protein/analyte) accumulates. Therefore, these sample portions are enriched in one or more fractions after free flow electrophoresis.

The term "sample" as used herein comprises at least two compounds, which are sufficiently soluble in an FFE separation medium according to the embodiments of the present invention. The samples employed in the methods and devices of the present invention may be derived from, but are not limited to protein mixtures, other reaction mixtures, or from natural sources such as biological fluids.

A "fractionated sample" in the context of the present invention means a sample wherein the various analytes in the sample are separated during an FFE step and wherein the sample can thus be divided into several fractions after the FFE separation step. Those of skill in the art will understand how to collect individual fractions which exit the separation chamber of an apparatus suitable for FFE through multiple collection outlets and are generally led through individual tubings to individual collection vessels of any suitable type (e.g., 96 well plates, and sometimes plates of different sizes, *e.g.,* 144, 288, 576 or even more wells).

As used herein, a "biological fluid" includes, but is not limited to, blood, plasma, serum, sputum, urine, tears, saliva, sputum, cerebrospinal fluid, lavages, leukopheresis samples, milk, urin, ductal fluid, perspiration, lymph, semen, umbilical cord fluid, and amniotic fluid, as well as fluid obtained by culturing cells, such as fermentation broth and cell culture medium and the like.

As used herein, a sample of a "protein mixture" is typically any complex mixture of proteins including their modified, unmodified, processed, or unprocessed forms, which may be obtained from sources, including, without limitation: a cell sample (e.g., a lysate, a suspension, a collection of adherent cells on a culture plate, a scraping, a fragment or slice of tissue, a tumor, a biopsy sample, an archival cell or tissue sample, a laser-capture of dissected cells, etc), an organism (e.g., a microorganism such as a bacteria or yeast), a subcellular fraction (e.g., comprising organelles such as nuclei or mitochondria, large protein complexes such as ribosomes or golgi, and the like), an egg, sperm, embryo, a biological fluid, viruses, and the like.

As used herein, the term "reaction mixture" relates to any mixture of at least two compounds, wherein at least one compound is a product of a chemical reaction and is derived from a compound which is or was present in the reaction mixture.

As used herein, a sample of "complex protein mixtures" may contain greater than about 2, 10, 20, 100, 500, 1,000, 5,000, 10,000, 20,000, 30,000, 100,000 or even more different proteins or peptides. Such samples may be derived from a natural biological source (e.g., cells, tissue, bodily fluid, soil or water sample, and the like) or may be artificially generated (e.g., by combining one or more samples of natural and/or synthetic or recombinant sources of proteins).

The term "peptide" as used herein refers to any entity comprising at least one peptide bond, and can comprise either D and/or L amino acids. A peptide can have about 2 to about 150, preferably about 2 to about 100, more preferably about 2 to about 50 and most preferably about 2 to about 20 amino acids.

As used herein, a "peptide mixture" is typically a complex mixture of peptides obtained as a result of the proteolytic cleavage of a sample comprising proteins.

"Buffer systems" as used herein refer to a mixture of mono, di- or tri-protic/basic compounds, which are able to maintain a solution at an essentially constant pH value upon addition of small amounts of acid or base, or upon dilution.

A "buffer compound" as used herein means a compound which forms alone or together with a second or further compounds a buffer system.

As used herein, the term "pH function profile" relates to the pH distribution over the entire separation space between the anode and cathode of an FFE apparatus. The pH function profile of the present invention can be formed by a plurality of separation media and/or focus media forming a "separation zone" and, preferably but not necessarily, also by stabilizing media. In certain embodiments of the present invention, a focus medium can act as a stabilizing medium. In other preferred embodiments of the present invention, the pH function profile may comprise more than one separation zone.

A "separation zone" as used herein should be understood to comprise a pH separation plateau and further comprising a pH function or pH gradient on the anodic side of said pH separation plateau and a pH function or pH gradient on the cathodic side of said pH separation plateau. In some embodiments, a separation zone comprises a pH separation plateau and a pH function or pH gradient on one side of the pH separation plateau. Adjacent to the other side of the pH separation plateau a focus zone is formed by a focus medium or a stabilizing medium which acts as a focus medium. In other words, each separation plateau is flanked by a pH function, a pH gradient, or a focus zone on the anodic and the cathodic side, respectively. These pH functions, pH gradients or focus zones may furthermore be adjacent to a focus medium and/or a stabilizing medium.

In addition, a pH function may comprise or consist of a focus medium. A pH separation plateau, a pH function and a pH gradient may each be formed by a separation medium or, in case of a pH function, by a separation medium or a focus medium or a combination thereof. A pH separation plateau, a pH function and a pH gradient can individually be formed by a separation medium introduced in one inlet into an FFE apparatus or can individually be formed by a multiplicity of separation media, equal to each other or different, introduced in several adjacent inlets of an apparatus suitable for FFE.

In accordance with the common usage in the art, the term "pH gradient" implies that there are no abrupt boundaries observed with regard to the pH. Under that definition, a graph of a pH gradient in an IEF device would be shown as a relatively smooth curve with no sharp transitions for the portion of interest. A pH gradient can be formed by a single medium introduced into one inlet of an FFE apparatus, but it may also be formed by a multiplicity of media introduced into the apparatus via a multiplicity of inlets wherein the media introduced into the inlets can be the same or different. A pH gradient is typically adjacent to a pH depletion plateau on one side, and adjacent to a focus medium or a stabilizing medium on the other side.

By contrast, the term "pH function" used herein is intended to have a broader meaning: It includes "pH gradients", but also includes pH transitions, i.e., more or less abrupt pH steps, which may lead to marked pH changes at the boundary between two pH zones. The change at the boundaries between two pH zones, e.g., the pH step between two pH plateaus, should preferably be greater than 0.5 pH units, preferably greater than 1 pH unit, and more preferably greater than 2 pH units. It is possible to create pH functions with sharp boundary changes in IEF devices by proper choice of separation buffer chemistries using the explanations and guidelines given herein.

The pH function as used in connection with embodiments of the present invention may comprise a pH gradient, a pH transition, a mixture of pH gradients, a mixture of pH transitions, or a mixture of pH gradients and pH transitions. A pH function can be formed by one medium introduced into one inlet of an apparatus suitable for FFE but can also be formed by a multiplicity of media inserted in a multiplicity of inlets wherein the media introduced in the inlets can be the same or different. A pH function is adjacent to a pH depletion plateau on each side thereof and is furthermore adjacent to a focus medium and/or a stabilizing medium on the side towards the anode and cathode, respectively.

Furthermore, a pH function may comprise or consist of a focus medium leading to a conductivity step, optionally in concert with a pH step. The pH function may comprise a sharp conductivity step, which implies that a pH function may additionally act as a focus medium.

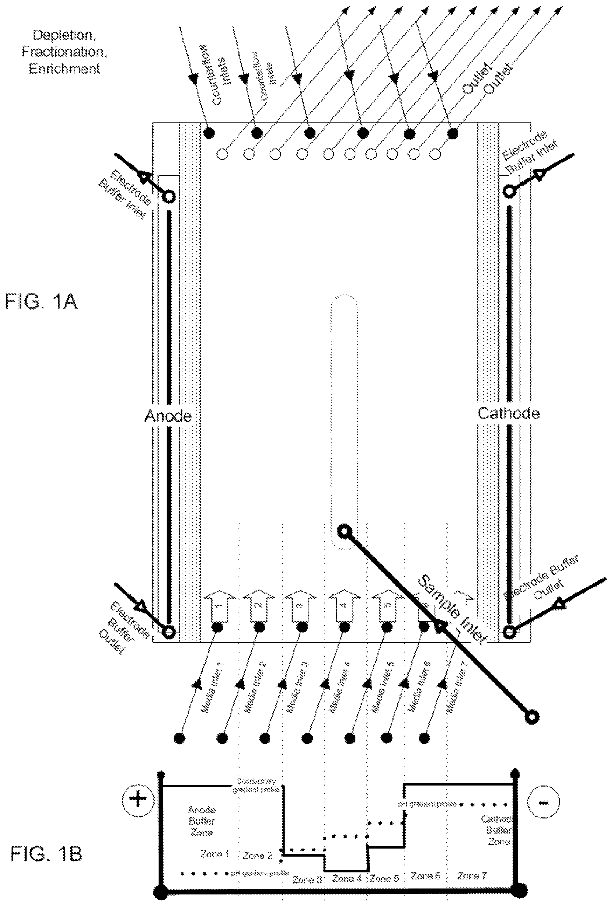

The term "pH separation plateau" used herein is essentially formed by one medium introduced into one inlet of an apparatus suitable for FFE, although it will be understood by those of skill in the art that more than one inlet of an FFE apparatus can be used to create said plateau. Although the pH range of the separation plateau shown in schematic FIG. 1B has ideally a range of zero (i.e., it is essentially flat having a constant pH that essentially corresponds to the pI of the analyte to be depleted), a typical range may be such that the zone includes an upper and lower pH limit depending from, e.g. the surrounding separation/focus media (i.e., forming an essentially extremely flat pH gradient).

The analyte to be separated will have a pI which results in the absence of any net charge at the average pH of said pH separation plateau, thereby causing no migration in the electrical field. In general, the pI of a certain analyte must be either known or must be identified by means known to those of skill in the art. One possible way to determine the pI of a given analyte of course includes the determination by a suitable FF-IEF technique.

A slight shift to higher pH values at the cathodic side of the pH separation plateau and a shift to lower pH values on the anodic side (dependent of the surrounding media) will usually, but not necessarily, be observed. Thus, the fractions recovered from the anodic side of the pH separation plateau will often be referred to as the acidic pool and the fractions recovered from the cathodic side of the pH separation plateau will often be referred to as the alkaline pool.

In general, the pH separation plateau encompasses a pH range of a maximum of 0.4 pH units or less, preferably 0.3 pH units or less and more preferably a pH range of 0.1 pH units or less. In embodiments where the analyte is a protein, the separation is preferably performed in its native state. For, e.g., native human serum albumin (HSA), a pH range of 4.7 to 5.0 is desirable, and a pH range of 4.8 to 4.9 is even more desirable in order to separate the protein from other analytes in a sample having a pI different from the pI of HSA, which is between 4.8 and 4.9.

In other preferred embodiments, protein-containing samples can be separated under denaturing conditions (e.g., by the addition of urea or suitable detergents known in the art). It will be appreciated by those of skill in the art that the pI of a given analyte such as a protein may be different to the pI in its native state. Accordingly, the preferred pH ranges for the pH separation plateau, e.g. for human serum albumin, will differ from FFE separations under native conditions as described above.

For example, under denaturing conditions the pI of HSA is normally between pH 6.3 and 6.4. Therefore, it is desirable to form a pH separation plateau with a pH range of between about 6.2 and about 6.5, although a pH range of between about 6.3 to about 6.4 is even more desirable. Reduction and alkylation of HSA under denaturing conditions typically leads to an observed pI of around 6.0 for the protein. Therefore, the pH range of a pH separation plateau to separate the latter modified HSA will preferably be selected to be between about 5.9 and about 6.2 and more preferably between about 5.9 and about 6.1, and most preferably between about 5.9 and about 6.0. It is readily apparent that for other high abundant proteins, the pH ranges will have to be similarly adapted to the pI of said protein.

The term "separation medium" refers to a medium suitable to form a pH plateau as required for a pH separation plateau or a pH function, or suitable to form a pH gradient. The conductivity of a separation medium forming a pH gradient should be less than 2 times higher than the conductivity of a separation medium forming an adjacent pH separation plateau, and preferably, the conductivity should be similar to the conductivity in the pH separation plateau. Most preferably, there should be essentially no difference in the conductivity at all. The conductivity of a separation medium forming a pH function adjacent to an pH separation plateau should be equal or 2 times or higher, 3 times or higher or 5 times higher than the conductivity of a separation medium forming said pH separation plateau. A separation medium in accordance with embodiments of the present invention can be selected from, but is not limited to the group consisting of binary buffer systems (A/B media), commercial ampholytes such as Servalyt^{®} from Serva, Germany, complementary multi-pair buffer systems such as BD FFE Separation Buffers I and II from BD GmbH, Germany, and volatile buffer systems. The buffer systems and their components will be explained in further detail herein below.

Although a wide variety of suitable buffer systems is described herein, the buffer system MES / glycylglycine is a preferred buffer system for native separation of, e.g., human serum albumin. Since the pI of an analyte to be separated, e.g. albumin, will usually differ dependent on whether the protein is present in its native or denatured form, other buffer systems such as HEPES / EACA (ε-aminocaproic acid) can be used. For example, HEPES / EACA is a preferred buffer system for separating albumin under denaturing conditions. Other possible buffer systems include but are not limited to MES / piperidine-3-carbonic acid and MOPSO/ piperidine-4-carbonic acid, and the like.

The properties of the separation media chosen for the electrophoresis process to be carried out can be, for example, adapted so as to achieve selective isolation of certain proteins, thereby enabling effective depletion of protein species while in some instances, enriching other protein species. The possible use of a variety of different buffer systems (and additives) additionally provides the advantage that a multitude of different analytes can be separated according to the methods of the present invention without compromising the stability and/or integrity of the analytes of interest.

In certain embodiments of the present invention, the separation may be conducted in parallel mode. For the latter, it is required to physically separate the separation zones by virtue of an inter-electrode stabilizing medium. The term "inter-electrode stabilizing medium" as employed herein refers to a medium composed of two mandatory components: One cathodic inter-electrode stabilizing medium and one anodic inter-electrode stabilizing medium. It is readily apparent that the use of the terms anodic and cathodic refers to the relative position of the correspondingly named inter-electrode stabilizing medium between a separation zone and the anode and cathode, respectively. For example, a typical order (from anode to cathode of the FFE apparatus) will be a stabilizing medium, a medium forming a first pH function or gradient, a medium forming a first pH separation plateau, a medium forming a second pH function, and then a cathodic inter-electrode stabilizing medium followed by an anodic inter-electrode stabilizing medium, a medium forming the third pH function or gradient, a medium forming a second pH separation plateau, a medium forming a fourth pH function, etc., and finally by a (cathodic) stabilizing medium. In the exemplary set-up described above, the cathodic inter-electrode stabilizing medium is thus closer to the physical anode of the FFE apparatus than the anodic inter-electrode stabilizing medium.

The anodic and cathodic inter-electrode stabilizing medium may comprise a monoprotic acid and/or a monobasic base. Those of skill in the art will appreciate that the ions formed in the inter electrode stabilizing media should have sufficiently low electrophoretic mobilities.

Each medium component preferably comprises anions and cations with electrophoretic mobilities less than or equal to about 40 x10⁻⁹ m²/V/sec, and more preferably even less than 30, 25 or even 20x10⁻⁹ m²/V/sec. Examples of components for the anodic stabilizing medium component comprise an acid selected from the group consisting of gluconic acid, glucuronic acid, acetylsalicylic acid, 2-(N-morpholino) ethanesulfonic acid, and certain amphoteric acids (known as Goods buffers). Examples of components for the cathodic stabilizing medium component comprise a base selected from the group consisting of N-methyl-D-glucosamine, tri-isopropanolamine and 2-[bis(2-hydroxyethyl)amino]-2-(hydroxymethyl)propane-1,3-diol.

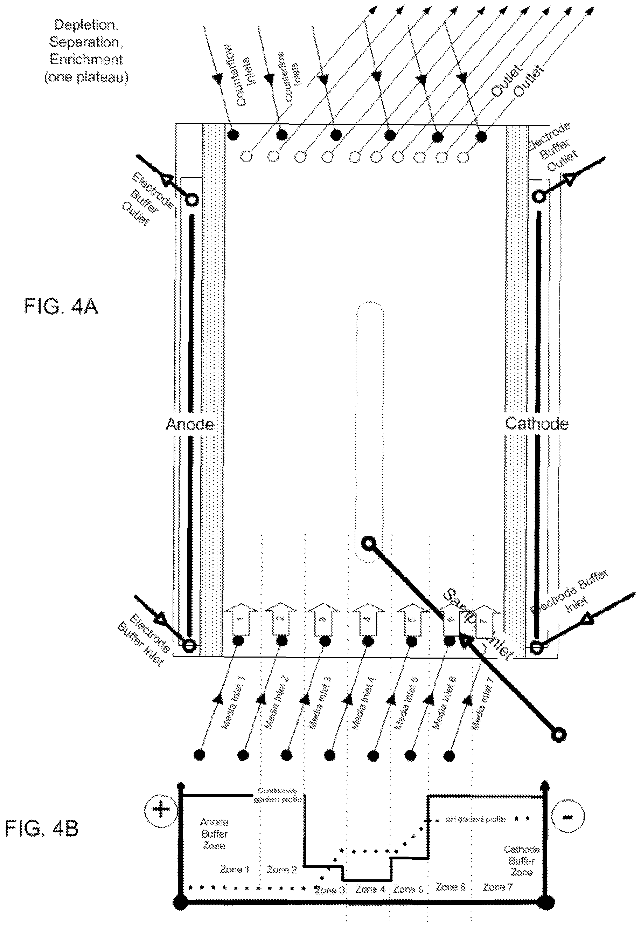

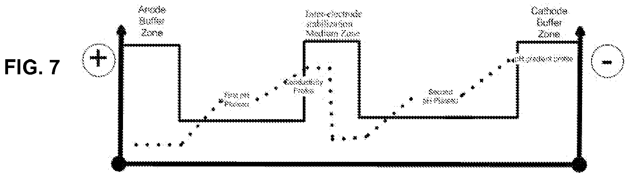

In embodiments of the present invention, the inter-electrode stabilization zone is established by introducing the two components of the inter-electrode stabilizing medium into the FFE apparatus in-between the plurality of separation zones. FIG. 7 shows an embodiment wherein an inter-electrode stabilizing zone is interposed between the two separation zones of an FFE apparatus, having an anode and cathode, thereby forming two distinct separation zones. As evident from FIG. 7, the pH separation plateau of the first DSE separation zone may have the same or a different pH value compared to the pH separation plateau of the second separation zone. It is therefore possible to have independent samples traveling through independent sample inlets, each sample introduced into one of the two (or more) separation zones, and therefore carry out multiple fractionation or separation protocols simultaneously with only one pair of electrodes. The sample inlets may be positioned independently from the media inlets of the FFE apparatus and are often located downstream from the media inlets (see, e.g., FIGs. 1A and 4A). In addition, they may be positioned at any desired position between the anode and the cathode of the FFE apparatus.

Typically, the inter-electrode stabilizing medium will have a conductivity higher than that of the first and second separation or fractionation zones adjacent to said inter-electrode stabilizing medium, thereby preventing the crossover of ionic species between the separation zones as well as crossover of anionic and cationic species of the anodic and cathodic inter-electrode stabilizing medium into the adjacent separation zones.

The term "focus medium" used herein refers to a medium comprising an acid for an anodic focus medium or a base for a cathodic focus medium which form a conductivity step regarding the adjacent pH function, pH gradient or pH separation plateau, forming a focus zone wherein the movement of analytes towards the anode or cathode is essentially reduced to zero due to a conductivity step. The concentration of the acid and base will be chosen so as to be sufficient to increase the conductivity of said focus medium, preferably by a factor of at least 2, and more preferably of at least 3, at least 5, or even more with regard to an adjacent pH separation plateau, pH gradient or pH function. This abrupt increase in the electrical conductivity of the medium is useful to accumulate analytes with a different pI than the pI of an analyte to be separated on a pH separation plateau at the border of the two media having different conductivity values since the mobility of analytes moving to the anode or cathode, respectively is reduced to essentially zero.

The pKa value of the acid in the anodic focus medium will be selected to be lower than the pKa value of the acid employed in the adjacent pH function, pH gradient or pH separation plateau (i.e. a stronger acid is selected for the anodic focus medium). In certain embodiments of the present invention, the pKa difference is greater than about 1 pH unit, preferably greater than about 2 pH units, and most preferably even greater than about 3 pH units. Suitable examples for an acid used to increase the conductivity is selected from, but not limited to the group consisting of sulfuric acid, pyridine-ethanesulfonic acid, hydrochloric acid, phosphoric acid, trifluoroacetic acid, trichloroacetic acid, and formic acid. An anodic focus medium may comprise the acid responsible for the increased conductivity and additionally the buffer compounds forming an adjacent pH function, pH gradient or pH separation plateau, and/or a weak base to regulate the pH of the focus medium. A weak base should be understood to have a pKa that is lower than the pKa of the base used in the adjacent pH function, pH gradient or pH separation plateau. Examples for suitable weak bases are, e.g., taurine, glycine, 2-amino-butyric acid, glycylglycine, β-alanine, GABA, EACA, creatinine, pyridine-ethanol, pyridine-propanol, histidine, BISTRIS, morpholinoethanol, triethanolamine, TRIS, ammediol, benzylamine, diethylaminoethanol, trialkylamines, and the like, provided they are selected in accordance with the pKa criteria explained hereinabove.

The same principles apply *mutatis mutandis* to the selection criteria for the base in the cathodic focus medium. Accordingly, the pKa value of the base in the cathodic focus medium will be selected to be higher than the pKa value of the base employed in the adjacent pH function, pH gradient or pH separation plateau (i.e. a stronger base is selected for the cathodic focus medium). In certain embodiments of the present invention, the pKa difference is greater than about 1 pH unit, preferably greater than about 2 pH units, and most preferably even greater than about 3 pH units. Suitable examples for a base used to increase the conductivity is selected from, but not limited to the group consisting of alkali or earth alkali hydroxides such as sodium hydroxide, 3-morpholino-2-hydroxy-propansulfonic acid, Tris, and the like. A cathodic focus medium may comprise the base responsible for the increased conductivity and additionally the buffer compounds forming an adjacent pH function, pH gradient or pH separation plateau, and/or a weak acid to regulate the pH of the focus medium. A weak acid should be understood to have a pKa that is higher than the pKa of the acid used in the adjacent pH function, pH gradient or pH separation plateau. Examples for suitable weak acids are, e.g., HIBA, acetic acid, picolinic acid, PES, MES, ACES, MOPS, MOPSO, HEPES, EPPS, TAPS, taurine, AMPSO, CAPSO, α-alanine, β-alanine, GABA, EACA, 4-hydroxypyridine, 2-hydroxypyridine, and the like, provided they are selected in accordance with the pKa criteria explained hereinabove.

By virtue of its high electrical conductivity and its composition, a focus medium of embodiments of the present invention may also act as a stabilizing medium.

"Stabilizing media" used for methods of the present invention have been described in co-pending US provisional application USSN 60/885,792. The stabilizing media are useful and suitable for stabilizing the conditions within the separation zone formed by, e.g., suitable binary buffer systems (herein referred to as "A/B media"). A suitable stabilizing medium thus also acts as a "reservoir" supplying or replacing the ions in the separation zone.

In accordance with embodiments of the present invention, the stabilizing media are preferably designed adhering to the following selection criteria. The pKa of the buffer acid in a cathodic stabilizing medium (CSM) should be higher than the pI value of the most basic analyte in the sample (i.e., the analyte having the highest pI). Similarly, the pKa of the buffer base in an anodic stabilizing media (ASM) should be lower than the pI of the most acidic analyte in the sample.

Suitable stabilizing media may be designed with only one buffer acid (CSM) or only one buffer base (ASM), although it is contemplated that the stabilizing media may also comprise more than one buffer acid (CSM) and buffer base (ASM), respectively. In certain embodiments, two, and sometimes even three or more buffer compounds may be present in the CSM and ASM, respectively, although it is of course generally preferred to keep the composition of the media as simple as possible.

In certain embodiments, the pKa of each buffer acid in the CSM should be within the range (pI + 0.3) < pKa < (pI + 3), preferably within the range (pI + 0.5) < pKa < (pI + 2), and most preferably within the range (pI + 0.5) < pKa < (pI + 1.3). Similarly, the pKa of each buffer base in the ASM should be within the range (pI - 3) < pKa < (pI - 0.3), preferably within the range (pI - 2) < pKa < (pI - 0.5), and most preferably within the range (pI - 1.3) < pKa < (pI - 0.5).

Alternatively, the pKa values of the buffer acids in the CSM and the buffer bases in the ASM can also be defined in relation to the pH range (i.e., minimum pH and maximum pH) of the separation medium. The definition based on the pH range of the separation medium may be alternative to the one referring to the pI of the analytes, or may be additive to said requirement. Accordingly, in certain embodiments relating to the stabilizing media of the present invention, the pKa value of each of the buffer acids in the CSM will be higher than the maximum pH value of the separation medium. Likewise, the pKa value of each of the buffer bases in the ASM will be lower than the minimum pH value of the IEF separation medium.

In certain preferred embodiments, the pKa value of each buffer acid in the CSM is in the range of (pHₘₐₓ + 0.3) < pKa < (pHₘₐₓ + 3), preferably within the range (pHₘₐₓ + 0.5) < pKa < (pHₘₐₓ + 2), and most preferably within the range (pHₘₐₓ + 0.5) < pKa < (pHₘₐₓ + 1.3), and the pKa value of each buffer base in the ASM is in the range of (pHₘᵢₙ - 3) < pKa < (pHₘᵢₙ - 0.3), preferably within the range (pHₘᵢₙ - 2) < pKa < (pHₘᵢₙ - 0.5), and most preferably within the range (pHₘᵢₙ - 1.3) < pKa < (pHₘᵢₙ - 0.5).

If more than one buffer acid (CSM) or buffer base (ASM) is present, the additional buffer compounds should be selected to have different pKa values within the above-prescribed range. In preferred embodiments, the concentration of the weaker buffer acids in the CSM and the weaker buffer bases in the ASM should be higher than the concentration of the respective strongest buffer acids (CSM) and buffer bases (ASM), i.e., the buffer acid having a pKa closest to the pI of the most basic analyte for the CSM, and the buffer base having a pKa closest to the pI of the most acidic analyte for the ASM, respectively.

Higher concentration in this regard means that the concentration of the weaker acids and bases is increased by a factor of at least 1.1, and preferably at least about 2, more preferably about 3, and sometimes by a factor of about 4, 5 or even 10 over the concentration of the strongest buffer acid/base in the CSM and ASM, respectively.

In addition, the stabilizing media may also comprise one or more buffer bases (CSM) and buffer acids (ASM), with the proviso that the combined concentration of all bases in the CSM is lower than the total concentration of the respective buffer acids, and the concentration of all acids in the ASM is lower than the total concentration of the respective buffer bases, respectively.

The pH of the CSM will normally be higher than the maximum pH (the end-point of the pH gradient towards the cathode) of the separation medium. Preferably, the pH of the CSM should not be higher than about 3, and more preferably not more than about 2 pH units above the maximum pH of the separation medium. Specifically for flat and ultraflat pH gradients, it is particularly preferred that the pH difference is kept to a minimum, i.e., the pH may only be 1.5 pH units or only 1 pH unit above the maximum pH of the separation medium. Likewise, the pH of the ASM should not be lower than about 3, and more preferably not more than about 2 pH units below the maximum pH of the IEF separation medium. For flat and ultraflat pH gradients, it is particularly preferred that the pH difference is kept to a minimum, i.e., the pH may only be 1.5 pH units or only 1 pH unit lower than the minimum pH of the IEF separation medium.

Those of skill in the art will appreciate that the pH values observed in the stabilizing media may not be constant over the entire range (particularly when approaching the electrodes), so that any reference to the pH of the stabilizing media should be understood as the pH at or near the boundary between the stabilizing and the separation medium. Moreover, it will be appreciated that the identity of the buffer compounds in the stabilizing media will have an influence on the pH conditions in the separation medium. In fact, the choice of the ingredients and their concentration will determine the pH gradient that is achieved when applying an electrical field during electrophoresis. It will therefore be understood that the reference to pH values will generally refer to the pH in equilibrium conditions (i.e., after the gradient has formed), and may under certain circumstances even deviate from the above-described preferred values without departing from the spirit of the present invention.

### Apparatus and Elements Thereof

FIGS. 1A and 4A depict an apparatus useful for separating species that can be separated by net charge and/or isoelectric point in a separation medium which flows in a separation chamber between two electrodes. The electrophoresis device comprises a rectangular separation chamber having a first (lower) wall and a second (upper) wall, two sidewalls and two superimposed parallel flat plates (not shown). Together, these elements form the sealed separation chamber. Two electrodes capable of and designed for generating a high-voltage electric field are located in the chamber and help define a separation space which is generally a portion of a zone disposed between the electrodes. The electrodes are preferably embodied as electrode chambers, through which flows an electrode buffer contacted by means of an electrical current supply line, and which preferably has a semi-permeable membrane juxtaposed with the separation chamber. The electrode buffers are fed into the electrode chambers by means of separate feed lines (only partially shown in FIGS. 1A and 4A) and also exit these chambers via separate outlets. Preferably, an additional pump apparatus (not shown) is employed to circulate the electrode buffer and to cool it if required with a thermostat.

The separation chamber, at or near (i.e., in proximity to) the first end, contains at least one sample inlet for the injection of the sample and at least one separation medium inlet for injection of the separation medium. In the case of multiple inlets, more than one separation medium can be provided. In proximity to the second end is located a plurality of sample collection outlets and, optionally, one or more counterflow media inlets. Both the collection outlets and the counterflow media inlets (if greater than one are present) are typically arranged along a line perpendicular to the flow direction. In some embodiments of the invention, only the collection outlets exist at the second end; while in other embodiments, both the collection outlets and the counterflow inlets exist at the second end.

The individual analytes exit the separation chamber through the multiple collection outlets and are generally led through individual tubing to individual collection vessels of any suitable type. In the collection vessels, the analyte is collected together with the separation medium and counter flow medium. The distance between the individual collection outlets of the array of collection outlets should generally be as small as possible in order to provide for a suitable fractionation/separation. The distance between individual collection outlets, measured from the centers of the collection outlets, can be from about 0.1 mm to about 2 mm, more typically from about 0.3 mm to about 1.5 mm.

In various embodiments, the number of separation medium inlets is limited by the design of the apparatus and practically ranges, e.g., from 1 to 7, from 1 to 9, from 1 to 15, from 1 to 40 or even higher depending on the number of media inlets chosen. The number of sample inlets ranges, e.g., from 1 to 36, from 1 to 11, from 1 to 5, from 1 to 4, or even from 1 to 3, whereas the number of collection outlets ranges, e.g., from 3 to 384, or from 3 to 96, although any convenient number can be chosen depending on the separation device. The number of counter flow media inlets typically ranges, e.g., from 2 to 9, or from 3 to 7. The number of provided inlets and outlets generally depends from the shape and dimensions of the separation device and separation space. Therefore, it will be appreciated that different numbers of separation medium inlets and outlets are also possible.

In FIGS. 1A and 4A, a separation medium flows in a laminar manner (preferably from the bottom upwards in a tilted or flat separation chamber) between and along the length of both the electrodes (large arrow). In some embodiments, the separation medium is decelerated by the counter flow of the separation medium (small arrow) in the vicinity of the outlets, and thus exits the separation chamber in fractions via the outlets. A sample of, e.g., proteins to be separated is introduced into the separation medium via the sample inlet and transported by the laminar flow of the separation medium. When operated under continuous operating conditions, the protein mixture is continuously separated electrophoretically, and collected in distinct fractions according to the properties of the separation buffer and the sample resulting from the electrical field generated between the electrodes in the separation medium. When operated under batch or discontinuous modes of operation, the sample may be collected into distinct fractions with a variable chamber size that can be adjusted depending on the characteristics and needs of the electrophoresis process.

Before being introduced via a sample inlet into the separation area of an FFE apparatus according to embodiments of the present invention, it may be necessary to dilute the sample in order to avoid large conductivity differences between the sample and the separation medium inside the FFE apparatus. A sample may conveniently be diluted with either water or with the separation medium, which is preferably the same or at least similar to the separation medium into which the sample is introduced via a sample inlet of the FFE apparatus. Typical dilutions that may be used in the practice of embodiments of the present invention may be about 1:10. Optionally, the dilution factor can be higher than 1:10 (e.g., 1:15, 1:20, etc.), depending on the available capacity or space allowed for accumulation of high abundant proteins in an isolation zone to avoid spill-over of high abundant proteins outside of the intended separation zone. If high abundant proteins are not present in the sample subjected to either the DFE or DSE technique (described below in more detail), a dilution of less than 1:10, such as 1:5, 1:2, 1:1, 2:1, etc., is possible. This may be the case, for example when a depletion column is used to deplete high abundant proteins prior to subjecting the sample to the electrophoretic separation methods of the present invention. In general, however, it will be appreciated that the sample should be injected into the FFE apparatus as concentrated as possible under the specific circumstances of the separation problem.

Dilution can either be effected by injecting the sample into one of the media inlets of the FFE apparatus. Alternatively, the dilution may be performed by introducing the sample into a sample inlet other than the medium inlet, such as a sample inlet that is disposed downstream from the entrance of the medium inlets, towards the direction of the sample outlets or the dilution can be performed before introducing the sample into the sample inlet by mixing the sample with an adequate medium.

In view of the above, another aspect of the present invention relates to an FFE apparatus as described herein that is adapted for conducting the FFE separation methods described herein.

### Suitable buffer systems

Several buffer systems are useful to form a pH function profile in accordance with the methods of the present invention. The buffer systems can be chosen from, but are not limited to, the group consisting of commercially available ampholytes (for example sold under the name Servalyt^{®} by Serva Electrophoresis GmbH, Germany), complementary multi-pair buffer systems (e.g., BD FFE Separation Buffers 1 and 2 sold by BD GmbH, Germany), volatile buffer systems, and binary buffer systems known as A/B media.

### Complementary multi-pair buffer systems

In certain embodiments of the invention, a mixture used to generate the pH gradient may be comprised of carefully matched acids and bases such that the mixture may provide a smooth pH gradient when current flows through the mixture. A mixture of low molecular weight organic acids and bases are chosen that enable an increased buffering capacity compared to commercially available high molecular weight ampholytes. These mixtures of carefully matched acids and bases are extremely well characterized in terms of molecular weight, pI, purity, and toxicity. Generally, the acids and bases have a smaller molecular weight than those of commercial ampholytes. Suitable complementary multi-pair buffer systems are known in the art. Specifically, a mixture with a pH range from 3 to 5 is sold as BD FFE Separation Buffer 1 while a mixture with a pH range from 5 to 8 is sold as BD FFE Separation Buffer 2 by BD GmbH Germany. These buffer systems have, for example, been described in general form in US patent application US 2004/0101973. Complementary multi-pair buffer systems as described above are referred herein as "CMPBS" or "CMPBS media".

### Volatile buffer systems

In other embodiments of the present invention, volatile buffer systems can be used to form pH separation plateaus, and pH plateaus within a pH function and pH gradients by using several inlets to form a pH gradient according to embodiments of the present invention. These buffer systems offer the particular advantage that they can be removed residue-free from the recovered fractionated sample after an FFE separation step.

A volatile separation medium according to embodiments of the present invention should be understood to represent, in its ready-to-use form, a composition, preferably an aqueous composition, that includes a buffer system comprising at least one buffer acid and at least one buffer base, wherein all of the buffer compounds are volatile. Optionally, at least one of the buffer compounds may be capable of functioning as a (volatile) matrix for mass spectrometry, particularly in MALDI applications.

The term "volatile" used in connection with the buffer compounds herein should be understood to refer to the buffer compound's ability to be completely removable from an aqueous sample under suitable conditions, i.e., the buffer compound can be evaporated without leaving behind any residual compound (e.g., a salt), i.e. residue-free. In its broadest meaning, a volatile buffer compound according to embodiments of the present invention can be removed residue-free under conditions selected from, but not limited to, the group of reduced atmospheric pressure, increased temperature, supply of energy by irradiation (e.g. UV light, or by applying a laser light), or any combination thereof, although it will be appreciated that a volatile buffer compound must essentially be non-volatile under FFE working conditions (i.e., atmospheric pressure and temperature ranges of typically between 0 and 40 °C as explained hereinabove).

In this context, the skilled person will understand that, in one embodiment of the invention, the analyte(s) that is (are) present in a sample comprising volatile buffer compounds will be non-volatile under the afore-mentioned conditions, i.e., the analyte(s) is (are) essentially not modified (e.g., by fragmentation or oxidation) and remain(s) in solution or in its (their) solid state. In certain embodiments, particularly under mass spectrometric working conditions, the analyte(s) will also be volatile and will be ionizable (required for detection by MS).

The term "non-volatile under FFE working conditions" as used herein means a volatility of a buffer compound leading to a concentration reduction of the respective buffer compound in the separation medium of less than 5% w/v or, preferably less than 2% w/v under working conditions and during the separation period of FFE. Most preferably, no concentration reduction will be observed at all under working conditions and the separation period of FFE.

The term "residue-free" in the sense of the present invention is to be understood that the volatile compound itself evaporates completely, but that residues caused, e.g., by an impurity of the used substances, may be non-volatile. However, it is well known to those of skill in the art that only compounds having the highest purity grade available should be used for analytic purposes, and particularly so for mass spectrometric analysis.

Removal of the solvent and buffer compounds by "evaporation" as used herein should be understood to refer to a removal from the analytes of interest through transferring the compounds into the gas phase and subsequent elimination of the gas phase by suitable means. Thus, evaporation as defined herein is different from eliminating the buffer compounds by techniques commonly referred to as buffer exchange (sometimes also referred to as "desalting"), including column chromatography, dialysis or cut-off filtration methods, or techniques known as solid phase extraction or analyte precipitation. Alternatively, in certain applications that are not included under the term evaporation, the buffer compounds present in salt form are simply washed away with water, although this obviously leads to an undesirable loss of sample material and, moreover, non-quantitative removal of the buffer compounds. Those of skill in the art will appreciate that the volatile buffer compounds as defined herein could, at least in principle, likewise be removed by such buffer exchange or solid phase extraction techniques, although this would of course neglect the distinct advantage offered by the volatility of the buffers (and makes no sense in view of the potential problems connected with buffer exchange techniques, e.g., difficult handling and low sample recovery).

Suitable exemplary techniques for removing the solvent and the volatile buffer compounds from a sample collected from an FFE separation step by evaporation include, but are not limited to, vacuum centrifugation using suitable devices such as a centrifugal evaporator or a vacuum centrifuge known for example under the name SpeedVac^{®}, by lyophilization or by a (gentle) heating of the aqueous sample. Other possibilities to evaporate the solvent and the buffer compounds include evaporation by subjecting the sample to reduced pressure conditions, e.g., applying a vacuum to the sample placed on a target plate used in mass spectrometric analysis. Those of skill in the art will appreciate that most mass spectrometric methods operate under vacuum conditions (for example vacuum MALDI) so that the volatile buffer compounds are conveniently removed after the introduction of the sample into the MS instrument, but prior to ionization.

Preferably, the volatile buffer compounds are removable under conditions of reduced pressure and/or increased temperature. Moreover, in other embodiments, the volatile buffer compounds may even be evaporated under ambient temperature and atmospheric pressure conditions, particularly if the volatile buffer-containing sample is present in a small volume (e.g., for mass spectrometric analysis). However, in most cases at least some buffer solution will not evaporate readily under those conditions. In yet other embodiments, the volatile buffer compounds can only be removed under harsher conditions (e.g., in vacuum and/or high temperatures, optionally with irradiation, such as under mass spectrometric working conditions).

In certain embodiments of the present invention, the FFE separation media comprise volatile buffer compounds wherein at least one of the volatile buffer compounds may act as a (volatile) matrix for mass spectrometric analysis, i.e., the compound can only be removed under mass spectrometric working conditions.

Examples for volatile buffer systems include, but are not limited to combinations of TRIS / acetic acid, diethanolamine / picolinic acid, dimethylamino-proprionitril / acetic acid, 2-pyridine ethanol / picolinic acid, benzylamine / 2-hydroxypyridine, tri-n-propylamine / trifluoroethanol, and the like.

### Binary buffer systems (A/B media)

Binary buffer systems as defined below are referred to herein as "A/B media". They are generally useful for each embodiment of the present invention. The separation medium comprises at least one buffer acid and at least one buffer base, with the proviso that the pKa value of the buffer acid is to be higher than the pH of the separation medium and the pKa of the buffer base is lower than the pH of the separation medium. Put another way, the pKa of the buffer acid will be higher than the pKa of the buffer base.

The pH profile exhibited by the separation medium may be essentially linear (i.e., without any major pH steps during electrophoretic separation). Depending on the stabilizing media employed as well as the pKa differences between the buffer acid and the buffer base, the A/B separation media according to this aspect of the invention will offer an essentially constant (i.e., flat) pH profile, or a rather gentle/flat pH gradient within the separation chamber. It will be appreciated that said separation media providing a zone with an essentially constant pH in the separation chamber between the electrodes are particularly useful for the creation of pH separation plateaus in accordance with the methods described herein. However, since the A/B media may also form flat- or ultraflat pH gradients, they can also be used for the creation of pH functions or pH gradients as defined herein.

Preferably, the A/B media employing at least one buffer acid and one buffer base in the above aspect of the present invention are characterized by a pKa difference between the at least one buffer acid and the at least one buffer base of between about 0.5 and 4 pH units, wherein the pKa of the acid must be higher than the pKa of the base as explained above. In preferred embodiments, the ΔpKa is between 1.2 and 1.8, which is particularly useful for pH separation plateaus having a constant pH within the separation chamber of an FFE apparatus. In other preferred embodiments, the ΔpKa will be between about 2.5 and 3.3, the latter being particularly suitable for flat pH-gradients.

One characteristic of the A/B media is that the electrical conductivity of the medium is relatively low, although it will be appreciated that the conductivity must be sufficiently high to achieve acceptable separation of the analytes in a reasonable amount of time. Thus, the conductivity of the A/B media is typically between 50 and 1000 µS/cm, and more preferably between 50 and 500 µS/cm, although those of skill in the art will be aware that the exact conductivity in the separation medium will of course depend on the specifics of the separation / fractionation problem, the presence of other charged species in the medium (e.g., ions required for sample/analyte stability) and the electrochemical properties of the analyte.

Preferably, the A/B media comprise only one buffer acid and one buffer base. In other words, such separation media represent binary media wherein one acid function of a compound and one base function of the same or another compound essentially serve to establish a separation medium with the desired pH and conductivity profile. While good results may also be achieved with two or more buffer acids and buffer bases in the separation medium, it is typically advantageous to use as few components as possible, not only because it is easier to prepare and possibly cheaper to use, but also because the electrochemical properties of the medium will become more complex if the number of charged species present in the separation chamber is increased.

The concept of A/B media is described in detail in co-pending US provisional application USSN 60/885,792. Suitable buffer bases in this context are, for example, taurine, glycine, 2-amino-butyric acid, glycylglycine, β-alanine, GABA, EACA, creatinine, pyridine-ethanol, pyridine-propanol, histidine, BISTRIS, morpholinoethanol, triethanolamine, TRIS, ammediol, benzylamine, diethylaminoethanol, trialkylamines, and the like. Suitable buffer acids are, for example, HIBA, acetic acid, picolinic acid, PES, MES, ACES, MOPS, HEPES, EPPS, TAPS, AMPSO, CAPSO, α-alanine, GABA, EACA, 4-hydroxypyridine, 2-hydroxypyridine, and the like, provided the pKa relationships between the buffer acid and buffer base as described above is met.

Furthermore, in the methods of the present invention binary buffer systems as disclosed in, e.g., U.S. patent 5,447,612 for separating analytes by FFE can also be employed. These binary media are suitable for forming rather flat pH gradients of between 0.4 to 1.25 pH units.

### Additives

The separation media of the present invention may further comprise one or more additives. Additives in accordance with embodiments of the present invention are compounds or ions that do not (or at least not significantly) contribute to the buffering capacity provided by the buffer acids and the buffer bases. Generally, the number and concentration of additives should be kept to a minimum, although it will be appreciated that certain analytes or separation problems require the presence of additional compounds either for maintaining analyte integrity or for achieving the desired properties of the medium (e.g., denaturing conditions, viscosity adaptation between various separation media, etc.).

Possible additives are preferably selected from other acids and/or bases, so-called "essential" mono- and divalent anions and cations, viscosity enhancers, detergents, protein solubilizing agents, affinity ligands, reducing agents, and the like.

As apparent from the foregoing explanations, other acids or base may be present in the separation media of the invention, provided the pKa of their acid or base function is sufficiently far-removed from the pH or pH range of the separation medium to avoid contributing to the buffering capacity of the solution (although they may of course contribute to the electrical conductivity in the medium). Examples for possible acids and bases include small amounts of strong acids or bases (e.g., NaOH, HCl, etc.) that are completely dissociated in solution, or very weak acids or bases that are present as essentially undissociated species in the medium (i.e. having a pKa that is more than about 4 units away from the pH of the medium).

Essential mono- and divalent anions and cations in the sense of the present application are ions that may be needed for maintaining the structural and/or functional integrity of the analytes in the sample. Examples for such essential anions and cations include, but are not limited to magnesium ions, calcium ions, zinc ions, Fe(II) ions, chloride ions, sulfate ions, phosphate ions or complexing agents such as EDTA or EGTA, or azide ions (e.g., for avoiding bacterial contamination), and the like.

Viscosity enhancers commonly used in the separation media may include polyalcohols such as glycerol or the various PEGs, hydrophilic polymers such as HPMC and the like, carbohydrates such as sucrose, hyaluronic acid, and the like. Viscosity enhancers may be required to adapt the viscosity of the separation medium to the viscosity of the sample introduced into the separation space, or to the viscosity of other separation and/or stabilizing media within the separation chamber in order to avoid turbulences created by the density or viscosity differences between sample and medium or between different adjacent media.

Additional additives that may be present include chiral selectors such as certain dextrins including cyclodextrins, or affinity ligands such as lectins and the like. Further, many suitable detergents are known to those of skill in the art, including SDS, surfactants such as fatty alcohols, octyl glucoside, polysorbates known as Tween^{©}, and the like. Examples of protein solubilizing agents include urea or thiourea, but may also include surfactants and detergents.

In other preferred embodiments, the separation of an analyte such as albumin is carried out under denaturing conditions. Preferred denaturing agents are urea or thiourea, or other suitable detergents known in the art. The concentration of urea is typically about 5 M, more preferably 6 M, and most preferably 8 M or higher.

In certain cases, it may be required to add reducing agents to prevent the oxidation of an analyte in the solution. Suitable reducing agents that may be added to the sample and/or the separation medium includes mercaptoethanol, mercaptopropanol, dithiothreitol (DTT), ascorbic acid, sodium or potassium metabisulfite, and the like.

In any event, because many of the aforementioned additives are electrically charged, their concentration should be kept as high as needed but at the same time as low as possible so as to maintain the electrical conductivity of the separation medium within the desired (low) range.

It should be noted that additives should at any rate be avoided in case the volatile media as described herein are employed, for example in connection with downstream analysis methods such as MALDI(/MS) because most additives are not volatile and would therefore remain in the sample, thereby potentially interfering with the subsequent MS analysis.

### Free flow isoelectric focusing (FF-IEF)

Isoelectric focusing (IEF), also known as electro focusing, is a technique for separating different molecules by their electric net charge differences. This technique can conveniently be performed under free flow electrophoresis conditions. It is a type of electrophoresis that takes advantage of the fact that a molecule's charge changes with the pH of its surroundings. IEF involves passing a mixture through a separation medium which contains, or which may be made to comprise, a pH gradient or a pH function. A separation chamber has a relatively low pH at the anodic side, while at the cathodic side it has a relatively higher pH. Between these sides, a developed pH gradient profile or pH function profile is formed that governs the electrophoretic movement of the analytes in question. At the isoelectric point (pI) for a certain molecule, the net charge of that molecule is zero and no further movement is observed within the separation chamber.

Each charged analyte which has a net positive charge under the acidic conditions near the anode will be driven away from the anode. As it moves through the chamber of the IEF system, it will enter zones having a higher pH, and its positive charge will decrease. Each analyte will stop moving when it reaches its particular isoelectric point, since it no longer has any net charge at that particular pH. Accordingly, analytes which have a net negative charge under the basic conditions near the cathode will be driven away from the cathode. As they move through the chamber of the IEF system, they will enter zones having a lower pH, and their negative charge will decrease. Each analyte will stop moving when it reaches its particular isoelectric point, since it no longer has any net charge at that particular pH. This effectively separates the various analytes in view of their different pIs. The isolated molecules of interest can be removed from the IEF device by various means, or they can be stained or otherwise characterized.

The FFE methods of the present invention to separate, isolate or deplete analytes from a sample comprising a mixture of analytes can be performed in various modes, including for example a continuous, interval or cyclic interval mode modus.

In "continuous mode" applications, the sample solution is applied continuously into the chamber, whereby the analytes, especially proteins, are separated under the continuous flow of the separation medium and the uninterrupted application of the electrical field during the entire separation process. Some or all analytes may then be collected continuously after the electrophoretic separation.

Continuous mode in the context of FFE should be understood to mean that the injection step as well as the separation step occurs continuously and simultaneously. The electrophoretic separation occurs while the medium and the analytes pass through the electrophoresis chamber where the different species are being separated according to their pI (IEF), net charge density (ZE) or electrophoretic mobility (ITP). Continuous mode FFE allows continuous injection and recovery of the analytes without the need to carry out several independent "runs" (one run being understood as a sequence of sample injection, separation and subsequent collection and/or detection).

It will be appreciated that continuous mode FFE includes separation techniques wherein the bulk flow rate is reduced (but not stopped) compared to the initial bulk flow rate while the analytes pass the separation space between the electrodes in order to increase the separation time. In the latter case, however, one can no longer speak of a true continuous mode because the reduction of the bulk flow rate will only make sense for a limited amount of a sample.

Another FFE operation mode known as the so-called "interval mode" in connection with FFE applications has also been described in the art. For example, a process of non-continuous (i.e., interval) deflection electrophoresis is shown in U.S. patent 6,328,868, the disclosure of which is hereby incorporated by reference. In this patent, the sample and separation medium are both introduced into an electrophoresis chamber, and then separated using an electrophoresis mode such as zone electrophoresis, isotachophoresis, or isoelectric focusing, and are finally expelled from the chamber through fractionation outlets. Embodiments of the '868 patent describe the separation media and sample movement to be unidirectional, traveling from the inlet end towards the outlet end of the chamber. This direction, unlike in traditional capillary electrophoresis, is shared by the orientation of the elongated electrodes. In the static interval mode described, e.g., in the '868 invention, acceleration of the sample between the electrodes caused by a pump or some other fluidic displacement element only takes place when the electrical field is off or at least when the voltage is ineffective for electrophoretic migration, i.e., when no part of the sample is being subjected to an effective electric field.

In other words, the interval process is characterized by a loading phase where the sample and media are introduced into the separation chamber of the electrophoresis apparatus, followed by a separation process where the bulk flow of the medium including the sample is halted while applying an electrical field to achieve separation. After separation/fractionation of the sample, the electrical field is turned off or reduced to be ineffective and the bulk flow is again turned on so that the fractionated sample is driven towards the outlet end and subsequently collected/detected in a suitable container, e.g., in a microtiter plate.

The so-called cyclic or cyclic interval mode in the context of FFE as used herein has been described in co-pending US provisional application USSN 60/823,833 filed August 29, 2006, and USSN 60/883 260. In sum, the cyclic interval mode is characterized by at least one, and possible multiple reversals of the bulk flow direction while the sample is being held in the electrophoretic field between the elongated electrodes. In contrast to static interval mode, the sample is constantly in motion thereby allowing higher field strength and thus better (or faster) separation. Additionally, by reversing the bulk flow of the sample between the elongated electrodes, the residence time of the analytes in the electrical field can be increased considerably, thereby offering increased separation time and/or higher separation efficiency and better resolution. The reversal of the bulk flow into either direction parallel to the elongated electrodes (termed a cycle) can be repeated for as often as needed in the specific situation, although practical reasons and the desire to obtain a separation in a short time will typically limit the number of cycles carried out in this mode.

In the case of interval mode applications, the separation medium flows in a non-continuous or non-steady state manner. For example, the sample may be injected or introduced with the high-voltage power switched off. Alternatively, a reduction of the electrical field strength during the elution from the separation chamber may be advantageous.

After the sample has been introduced the transportation of separation media is switched off or optionally, cycled back in forth so that the bulk flow of media between the electrodes is maintained between the electrodes. Once the sample is introduced to the desired extent, the high-voltage current is then switched on, or raised, until the sample has been separated electrophoretically. After a period of time the voltage is switched off, or turned down and reduced in magnitude, and the separated sample is eluted from the separation chamber by increasing the flow of medium, or at least displacing the medium towards the collection outlets to be collected. Provision can also be made for an auxiliary medium to be introduced into the separation chamber via auxiliary medium feed lines (preferably at the end of the FFE apparatus directly opposite the medium feed lines) and extracted together with the separation medium via the fractionation outlets. Herein, this auxiliary medium will be referred to as a counterflow medium and the point at which the auxiliary medium feed lines intersect the chamber will be referred to as the counterflow inlets.

Due to an isolation step, compounds of low concentration can be accumulated in the chemical buffering system in a manner such that the higher abundance proteins are accumulated or isolated in a location other than where the low concentration proteins accumulate. If the isolated higher abundant proteins are not analyzed while the lower abundant proteins are, the high abundant proteins are essentially depleted and thus do not interfere with measuring the low concentration proteins, compounds or analytes, thereby facilitating their detection and identification. Additionally, for identification purposes, it can also be advantageous that the chemical buffering system be associated with means to specifically identify a compound or a class of compounds.

### Separation Protocols

One or multiple pH plateaus can be used for the embodiments of the invention to assist in the depletion or isolation of proteins at or around a pH separation plateau, while enabling other proteins to be enriched adjacent to or away from said pH plateau. The pH value of the plateau may be modified to influence which proteins get isolated or depleted from the remainder of the sample.

Two FFE-IEF modes of operation are described herein in more detail which enable the user to improve preparative or analytical techniques so as to isolate and/or selectively deplete analytes from a sample. In one embodiment, the depletion, fractionation, and enrichment (**DFE** protocol) of certain analytes may be achieved. In the second embodiment, the depletion, separation, and enrichment (**DSE** protocol) of certain analytes may be achieved. Examples of analytes to be depleted are, e.g., high abundant proteins which are chosen from but not limited to the group consisting of albumin, alpha-1-antitrypsin, transferrin, haptoglobulin, casein, myosin, actin and the like.

As described hereinabove, the method for separating an analyte to be separated from a composition of analytes by free flow electrophoresis comprises the steps of forming within a free flow electrophoresis (FFE) chamber a pH function profile between an anode and a cathode, comprising a pH separation plateau which average pH corresponds essentially to the isoelectric point (pI) of an analyte to be separated and which has a pH range delimited by an upper pH limit and a lower pH limit, and further comprising a pH function between the anode and the pH separation plateau having an average pH lower than the pH of the pH separation plateau and/or a higher electrical conductivity than the pH separation plateau, and a pH function between the cathode and the pH separation plateau having an average pH greater than the pH of the pH separation plateau and/or a higher electrical conductivity than the pH separation plateau, introducing a sample comprising an analyte to be separated from a mixture of analytes into the FFE chamber wherein the sample can be introduced in the pH separation plateau, in a zone at the anodic side or in a zone at the cathodic side of said pH separation plateau; and eluting the analytes from the FFE chamber. In case the pI of said analyte to be separated from a composition of analytes is not known, the method may further comprise identifying the pI of said analyte prior to the electrophoretic separation. Optionally, all or a portion of the analytes may be recovered in one or a plurality of fractions.

### DFE protocol

The DFE protocol in accordance with embodiments of the present invention is useful to separate analytes, e.g., particular proteins from a mixture of analytes by free flow IEF.

The pH function profile suitable for a DFE protocol comprises a pH separation plateau, which encompasses the pI of the analyte to be separated from other analytes of a mixture, and a pH function between the anode and the pH separation plateau, having a pH lower than the pH of the pH separation plateau as well as a pH function between the pH separation plateau and the cathode having a pH greater than the pH of the pH separation plateau. In DFE, there is a distinct pH step between the two pH functions and the pH separation plateau of at least 0.5 pH units, preferably 1 pH unit and more preferably 2 or more pH units. Alternatively and/or additionally, the pH functions adjacent to the pH separation plateau may exhibit a higher electrical conductivity. In other words, the medium forming the pH function will be a "focus medium" as described herein above in more detail.

After introducing the sample composed of a mixture of analytes comprising the analyte(s) to be separated into the pH separation plateau inside the separation chamber of an FFE apparatus, the mixture of analytes will be separated by applying an electrophoretic field, and the analytes to be separated from the sample are subsequently recovered from the separation zone of the apparatus by suitable means via a plurality of collection outlets.

The skilled person knows how to identify the pI of an analyte using techniques known to those of skill in the art. Alternatively, the skilled person can use the present isoelectric focusing technique in combination with, e.g., a subsequent gel electrophoresis and immunodetection to identify the pI of a protein. During the DFE separation protocol, a voltage is applied between the anode and the cathode of an FFE apparatus which causes electrical current to flow across the separation buffers and media, thereby causing an electrophoretic curtain to be established across and between the electrodes, forming a pH function profile and a conductivity profile as schematically shown in FIGs. 1, 2, 4, 5, 7, and 8.

A suitable apparatus for FFE, as well as the pH and conductivity profiles of an exemplary DFE experiment is shown in FIG. 1A and 1B. Media introduced via inlets form respective composition zones once the media has had a chance to stabilize and form based upon the electrophoretic migration and stabilizing properties of the media and adjacent media zones. In other words, a medium introduced via inlet 1 forms a Zone 1, and a medium introduced via inlet N, forms a Zone N, wherein N is an integer as exemplified in embodiments of the present invention from 1 to and including 7, but may include in other embodiments a range from 1 to 8, 9, 10, 12, 15, 20, 30, 40 or even higher, depending on the number of media inlets provided for in the FFE apparatus. Furthermore, it is readily apparent that more than one inlet can be used to form a single composition zone (i.e., an identical medium is introduced into the FFE apparatus via several adjacent media inlets).

The boundaries between zones may be distinct, or optionally overlapping and non-distinct depending on the electrochemical properties of the media in each zone. Since the inlet compositions and composition zones vary in pH, an isoelectric focusing mode of electrophoresis may take place within the electrophoresis chamber during and after the forming of the pH profile gradient.

The zones disposed between the pH separation plateau (the latter formed by inlet 4 in FIG. 1B) and one of the electrodes will usually have a different pH than that of the pH separation plateau, and therefore enable movement of amphoteric analytes injected or introduced into the pH separation plateau having a pI that is different than the pI needed to stay in the pH separation plateau. The analytes will therefore migrate away from the pH separation plateau towards one of the electrodes. More specifically, amphoteric analytes within the sample that have a pI lower than the pH of the pH separation plateau will have a negative net charge when disposed in the pH separation plateau, and thereby migrate towards the anode. Additionally, amphoteric analytes or proteins within the sample that have a pI greater than the pH of the pH separation plateau will have a positive net charge when disposed in the pH separation plateau, and thereby migrate towards the cathode. Depending on the nature and composition of the sample, the sample may generally be injected or introduced into an FFE apparatus into the pH separation plateau, into a zone between the pH separation plateau and the anode or into a zone between the pH separation plateau and the cathode. Preferably, however, the sample will be injected into the pH separation plateau.

In some embodiments of the invention, both zones adjacent to the pH separation plateau created by the separation media introduced into the chamber will cause an acidic or alkaline pH plateau to form depending on the separation media and buffer injected or introduced into the separation space (inlets 3 and 5 in FIG. 1B). The zone between the anode and the pH separation plateau will essentially form an acidic pH plateau and the zone between the cathode and the pH separation plateau will form an alkaline pH plateau. The DFE protocol as described herein will lead to concentrate acidic and alkaline pools of amphoteric analytes, essentially flanking the depletion pool that will remain in the pH separation plateau.

In Example 1 described herein, the pH of the pH separation plateau was chosen to correspond to the pI of the native state of the high abundant protein human serum albumin. In other embodiments, it is contemplated that the pH of the pH separation plateau may be chosen such that the protein(s) to be depleted will remain in the pH separation plateau while other analytes having a different pI will not remain in the pH separation plateau and rather migrate away from the pH separation plateau due to its net charge driven by the difference between pI and the surrounding media's pH.

The acidic and alkaline pH plateau zones may have a generally extended span, and the user may desire to have acidic or alkaline pools of fractionated proteins collected or concentrated at a certain location along the span of the pH plateaus. Since the point at which the amphoteric analytes may come to rest may naturally occur beyond the end portions of the acidic and alkaline pH plateaus furthest away from the pH separation plateau, in certain embodiments of the invention the user may wish to collect analytes at a specific location by halting or stalling electrophoretic migration of particles or proteins with the help of conductivity "walls" achieved, for example, by a focus medium as described herein.

By virtue of the significantly higher electrical conductivity of certain media disposed inside or adjacent the acidic and alkaline pH plateaus, analytes may be prevented from migrating past the plateaus and instead concentrate into pools rather than continue further towards the anode and cathode. Additionally, by choosing zones that immediately flank the pH separation plateau with a conductivity higher than that of the pH separation plateau, amphoteric analytes that migrate away from the pH separation plateau will immediately accumulate at the so called "interface" between the acidic zone and the pH separation plateau, or between the pH separation plateau and the alkaline zone, respectively. The pH step between the pH separation plateau and the pH of the adjacent acidic or alkaline zone is usually greater than 0.5, preferably greater than 1.0, or even greater than 2 pH units. It should be noted that the exact electrophoretic behavior of analytes subjected to this technique are dependent upon the nature and quantity of the sample to be separated as well as the separation media used to separate the sample.

Therefore, in embodiments of the present invention, the separation media, stabilizing and/or focus media will be chosen appropriately to establish a high conductivity "wall" inside one if not both of the acidic and alkaline plateaus (zone 3 and zone 5 respectively in FIG. 1B). The resulting acidic and alkaline pools will under the above circumstances show an accumulation or concentration effect for certain analytes.

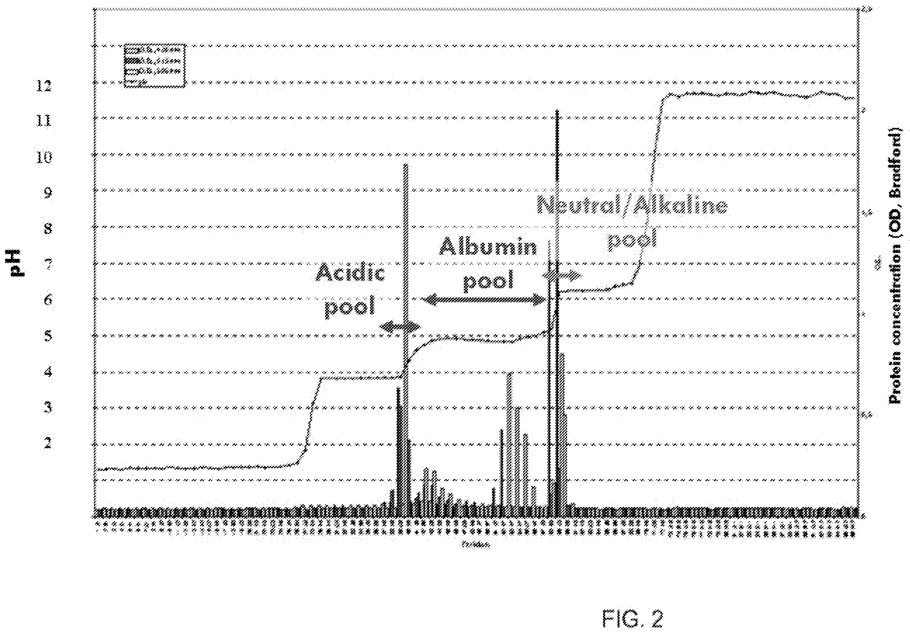

The separation shown, e.g., in FIG. 2 was enabled by the use of pH plateaus and high conductivity media in connection with a free flow isoelectric focusing technique. Once the three fractions (pH depletion zone fraction or depletion pool, acidic pool, and alkaline pool) have been collected, the researcher may perform further preparative or analytic operations to all, a portion of or a combination of the fractions in a variety of ways which comprises but is not limited to: electrophoresis such as native gels, 1D- or 2D-PAGE, chromatographic techniques, MS, NMR, circular dichroism, IR-spectroscopy, UV-spectroscopy, or biochemical assays such as activity assays.

In an embodiment of the invention, the acidic and alkaline pools are grouped together or recombined such that only the isolated high abundant protein pool is missing or depleted from the mixture. The combined acidic and alkaline pools may then be further processed or analyzed. For example, the combined pools may subsequently be separated using, for example, an electrophoretic technique such as zone electrophoresis, isoelectric focusing, or isotachophoresis. Optionally, the combined pools may be processed again using the DFE protocol adjusted for the same or optionally a different high abundant protein to be eventually depleted. Therefore, the particles, analytes, or proteins will electrophoretically separate or migrate without the influence of the protein(s) that were depleted in the first fractionation step described above. This reduces sample complexity and thus is able to unmask lower abundant proteins. Therefore, an analysis of the sample using a 1D or 2D - PAGE analysis will benefit from not having shown the existence or normal concentration of the high abundant protein, therefore enabling better resolution or visualization of the lower abundant proteins. In other words, enhanced resolution by use of the above technique enables unmasking of low-abundant proteins, e.g., for enhanced LC-MS/MS identifications. Additionally, since non-depleted proteins may have originally been subjected to non-specific binding to the high abundant protein, the use of certain elements of the present invention may enable the measurement, processing, or analysis of proteins that traditionally would be bound to the high abundant protein.

In another embodiment, the acidic and alkaline pools may be discarded, and the collected depletion zone containing the high abundant protein is further separated or fractionated using, for example, an electrophoretic technique such as zone electrophoresis, isoelectric focusing, or isotachophoresis. The particles, analytes, or proteins which either were eventually bound to the high abundant protein or which otherwise may have remained collectively isolated with the high abundant protein due to similar electrophoretic mobility characteristics of the high abundant protein will electrophoretically separate or migrate without the influence of the protein(s) that were not depleted in the first fractionation step described above.

### DSE protocols

The above protocol for electrophoretic depletion, fractionation, and enrichment (DFE) of a sample (typically comprising proteins) is successful in producing at least two, more preferably three fractions of proteins in their native or in denatured state, with one of the fractions comprising the analyte to be depleted (i.e., to be separated from further analytes in a sample), and the remaining fraction or fractions comprising further analytes that can be utilized for subsequent processing and/or analysis.

Instead of choosing to recombine the acid and alkaline pools of the above-described DFE protocol prior to electrophoretically separating the sample in an optional, yet additional IEF step in order to resolve the total protein sample excluding the depleted protein, the DSE protocol in accordance with embodiments of the present invention allows both, the separation of, e.g., low abundant proteins, and the depletion of, e.g., high abundant proteins to be performed simultaneously in a single step electrophoretic technique. Like the first protocol described above, the DSE protocol described herein enables, e.g., the depletion of high abundant proteins from a sample using a free flow electrophoresis method and apparatus, but provides the additional advantage of further separating the "non-depleted" sample portion, all in a single FFE separation run.

The DSE protocol is particularly useful to separate the low-concentrated analytes from, e.g., abundant analytes, such as abundant proteins, by free flow IEF. In general, the protocol is equivalent to the DFE protocol: the pI of an abundant analyte to be depleted must be known or must be identified. Moreover, the pH function profile created for a DSE protocol within an FFE apparatus comprises a pH separation plateau, which encompasses the pI of the analyte to be separated from other analytes of a mixture.

However, in contrast to the DFE protocol, the pH function profile suitable for DSE furthermore comprises a pH gradient having an average pH lower than the pH of the adjacent pH separation plateau between the anode and the pH separation plateau, and/or a pH gradient having an average pH greater than the pH of the adjacent pH separation plateau between the pH separation plateau and the cathode.

The pH gradients useful for DSE applications usually span 0.5 or more, sometimes 1 or more, and in certain embodiments 2 or even 3 or more pH units. After introducing the sample composed of a mixture of analytes comprising the analyte(s) to be separated into the pH separation plateau inside the separation chamber of an FFE apparatus, the mixture of analytes will be depleted and separated by applying an electrophoretic field, and the analytes to be separated from the sample are subsequently eluted and optionally recovered from the separation zone of the apparatus by suitable means via a plurality of collection outlets.

A plurality of media inlets are disposed in the inlet end of an electrophoresis chamber. In an embodiment of the invention, at least 5 inlets are utilized for delivering a variety of solutions into the chamber to produce a desired pH function and conductivity profile that assists in carrying out the method according to embodiments of the present invention. Particularly for existing FFE equipment such as those, 7 or 9 inlets will be preferably utilized to deliver the various separation, stabilizing and focus media into the separation chamber. Although the use of 7 or 9 inlets is currently preferred in view of the design of the FFE apparatus used to perform the experiments in connection with embodiments of the present invention, it will be appreciated that the number of inlets is not limited to 7 or 9 inlets, but can also comprise 5, 6, 8, 10, 11, 12, 13, 14, 15 or more inlets that can be used to form a desired pH function profile.

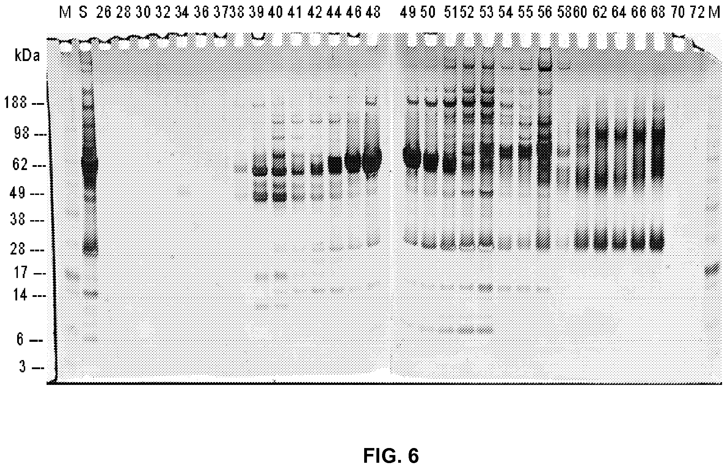

A voltage is applied between the anode and the cathode which causes electrical current to flow across the separation buffers and media, thereby causing an electrophoretic curtain to be established across and between the electrodes, forming a pH and conductivity profile as reflected in FIG. 4B and FIG. 6.

The various media introduced through the inlets form respective composition zones, once the media have had a chance to stabilize and form a pH function or pH gradient based upon the electrophoretic migration and stabilizing properties of the media and adjacent media zones. In other words, a medium introduced via inlet 1 forms a Zone 1, and a medium introduced via inlet n forms a Zone N, wherein N is an integer as exemplified in embodiments of the present invention from 1 to and including 7, but may include in other embodiments a range from 1 to 8, 9, 10, 12, 15, 20, 30, 40 or even higher, depending on the number of media inlets provided for in the FFE apparatus. Furthermore, it is readily apparent that more than one inlet can be used to form a single composition zone (i.e. an identical medium is introduced into the FFE apparatus via several adjacent media inlets).

For DSE protocols, it is easily apparent that at least three different separation media (introduced via three distinct media inlets), corresponding to three distinct zones, will be required in order to achieve the desired pH profile for DSE. The same is generally true for DFE protocols, although the two pH functions adjacent to the pH plateau may also be formed by stabilizing or inter-electrode stabilizing media (which reduces the number of distinct media required for a DFE protocol when operated in parallel mode with multiple separation zones).

The boundaries between zones may be distinct or non-distinct depending on the electrochemical properties of the media in each zone and to whatever level of overlapping is able to occur based on their properties of the media. Since the inlet compositions and composition zones vary in pH, an isoelectric focusing mode of electrophoresis may take place within the electrophoresis chamber during and after the forming of the pH function profile suitable for DFE and DSE, respectively.

An embodiment of the present invention illustrating the DSE protocol is shown in FIG. 4. In this exemplary embodiment of the invention, a pH separation plateau is formed, for example, essentially in Zone 4 as shown in FIG. 4B. The composition of the separation media and buffer solutions that make up the pH separation plateau is chosen in accordance with the pI of the analyte to be depleted, although the "plateau" will typically exhibit a certain small pH range to encompass the isoelectric point of the analyte, e.g., a protein desired to be depleted (e.g. a high abundant protein). Although the pH slope of the depletion zone (Zone 4) shown in FIG. 4B has a slope of zero, the actual slope may be such whereby the zone includes an upper and lower pH limit, wherein the protein to be depleted will have a native isoelectric point (pI) to maintain zero net charge within that chosen pH range. Therefore, the slope of the pH gradient can be modified from a value of zero to the slope of a pH gradient with a short pH span, depending on the concentration and the number of chemicals used for the buffer system.

The additional zones disposed between the pH separation plateau and one of the electrodes will have a different pH profile than that of the pH separation plateau, and therefore enable movement of amphoteric analytes injected or introduced into the pH separation plateau that have a pI different than that needed to stay in the pH separation plateau. The particles will therefore migrate away from the pH separation plateau towards one of the electrodes. More specifically, amphoteric analytes that have a pI lower than the pH of the pH separation plateau will have a negative net charge when disposed in the pH separation plateau, and thereby migrate towards the anode as well as all nonamphoteric anions. Additionally, amphoteric analytes that have a pI greater than the pH of the pH separation plateau will have a positive net charge when disposed in the pH separation plateau, and thereby migrate towards the cathode as well as all nonamphoteric cations.

In certain DSE embodiments of the invention, both zones adjacent to the pH separation plateau will have a pH gradient profile different than that of the pH separation plateau and will form either an acidic or alkaline pH gradient, preferably linear gradients, depending on the separation media and buffer injected or introduced adjacent to the separation media forming the pH separation plateau. The media introduced into the space between the pH separation plateau and the anode will essentially form a more acidic pH gradient rising from the anode towards the pH separation plateau and the media introduced between the pH separation plateau and the cathode will form a more alkaline pH gradient rising from the pH separation plateau and increasing towards the cathode. The more acidic gradient should have a pH range and buffering capacity to accommodate all proteins desired to be separated with a pI less than that of the depleted protein pI range chosen for the pH separation plateau, and the alkaline gradient should have a pH range and buffering capacity to accommodate all proteins desired to be separated with a pI greater than that of the depleted protein pI range chosen for the pH separation plateau.

The DSE protocol described herein allows for acidic and alkaline gradient zones to form and essentially flank the depletion pool established by the pH separation plateau. In Example 2 described herein, the pH of the pH separation plateau was chosen to be that of albumin (pI around 4.8), one of the most abundant proteins in human plasma. Since the pH of the pH separation plateau is chosen to correspond to the pI of albumin, albumin is maintained in a depletion pool while proteins having a pI outside the pH range of the pH separation plateau are electrophoretically driven towards either the anode or the cathode, depending on the pI of the specific protein.

In other embodiments where the depletion of another high abundant protein is contemplated, the pH of the pH separation plateau may be chosen such that the protein mixture intended to eventually be depleted will remain in the pH separation plateau while analytes having a different pI will not remain in the pH separation plateau and rather migrate away from the pH separation plateau due to their net charge caused by the difference between their pI and the surrounding media's pH.

Since it is likely that particles or proteins within the sample, once injected or introduced into the pH separation plateau after the pH gradient has been established, will naturally continue to migrate until they reach their isoelectric point where their net charge will be essentially zero, there may be a need to halt or stall electrophoretic migration of nonamphoteric ionic species as well as particles or proteins that have isoelectric points lower than that of the lowest pH area of the generally acidic buffer zone, and higher than that of the generally alkaline buffer zone. Therefore, in certain embodiments of the present invention, the separation media, stabilizing and/or focus media will be chosen appropriately to establish a high conductivity "wall" inside the pH function profile, either inside or adjacent to the pH gradients. For practical reasons, it may be desirable to provide focus and/or stabilizing media between the pH gradient zone and the anode, and between the pH gradient and the cathode, respectively. Such a setup is described, for example, in FIG. 4B.

By virtue of the significant electrical conductivity of certain buffers disposed inside or adjacent the acidic and alkaline regions, the migration of particles or proteins may be prevented, therefore controlling undesired mobility further towards the anode and cathode.

Therefore, the media referred herein as focus media may be designed to establish a high conductivity "wall" inside or adjacent to one or both of the acidic and alkaline pH functions or pH gradients in the anodic and cathodic zone, respectively. The use of such a focus medium forming a high conductivity wall will therefore influence the concentration of the sample of proteins that have a pI which is lower than that of the acidic gradient and greater than that of the alkaline gradient depending on where the conductivity is desired to be established by the user.

### Use of Fractions after DFE / DSE

Once all of the separated fractions have been collected, the researcher may perform further preparative operations to all or a portion of the fractions, or optionally may perform an analysis of the fractions in a variety of ways.

In embodiments of the invention, the researcher may further electrophoretically separate the sample collected in the acidic and alkaline gradients, thereby having an electrophoretic separation of all collected proteins minus those depleted in the first DSE step.

In another embodiment of the invention, the researcher may adjust which proteins will be depleted by choosing multiple pH plateaus associated to the proteins of desired depletion. For example, by choosing to isolate albumin for a potential depletion of albumin (with a native pI around 4.8) and one of the most abundant isoforms of transferrin, whose most abundant isoform has a pI of 5.4, the researcher may design a media and buffering system to create two depletion pH plateaus at 4.8 and 5.4 respectively, while the zones between the anode and 4.8 plateau, between the 4.8 and 5.4 plateaus, and between the 5.4 plateau and the cathode will be gradients of increasing pH. In such a setup, protein mixtures introduced into or adjacent to the separation plateaus will migrate according to their pIs, with albumin migrating to and remaining in the pH 4.8 plateau and transferrin isoforms migrating to and remaining in the pH 5.4 plateau.

Upon collection of all the fractions and discarding proteins collected in the pH 4.8 and 5.4 separation plateaus, the researcher may analyze the protein mixture from the isoelectrically focused and separated sample with a reduction in multiple abundant proteins determined by the separation plateaus not utilized in the analysis. In other words, both zones of pH plateaus that are not utilized during later analysis enable an analysis of the mixture of proteins in absence of multiple high abundant proteins depleted from the sample of proteins.

The eluted samples collected either according to a DFE or a DSE protocol, in their entirety or in parts, may be further processed, fractioned or combined and used for further separation in a variety of separation techniques, including electrophoretic techniques such as, for example, zone electrophoresis, isoelectric focusing, or isotachophoresis.

Like the DFE protocol, the DSE protocol allows for particles or proteins to electrophoretically separate or migrate without the influence of the protein(s) that were isolated during the DSE separation step described above. This protocol therefore reduces sample complexity and may unmask lower abundant proteins that historically may be prevented from being visualized based upon the existence of higher abundant proteins. Therefore, an analysis of the sample using a 1D or 2D - PAGE analysis will be improved and have better resolution or visualization of the lower abundant proteins. In summary, the above techniques enable enhanced resolution through the unmasking of low-abundant proteins, especially for enhanced LC-MS/MS as well as downstream 1D or 2D-gel electrophoresis analysis.

It is readily apparent from the above, that the methods of the present invention, and particularly the various media employed to achieve any desired pH profile within the separation chamber of an FFE apparatus can be freely combined in view of the enormous flexibility of the free flow electrophoresis technology. For example, it is possible to create a pH function profile, wherein the pH function profile comprises a pH separation plateau, flanked on the anodic side by a pH gradient and on the cathodic side by a pH plateau, or *vice versa* (such protocols could be referred to as combined DFE / DSE protocols).

Moreover, the various protocols such as DFE or DSE can also be combined sequentially in several FFE separation steps. For example, FFE separations can be run using the DFE protocol, and fractions recovered therefrom can be further subjected to another FFE separation using either the same or a different protocol (i.e., the same or different buffer systems, pH functions, pH plateaus, and the like). Thus, the following combinations of subsequent protocols are also specifically contemplated herein: DSE/DSE, DFE/DSE, DSE/DFE, DFE/DFE, or any of the foregoing protocols or protocol combinations combined with yet another FFE protocol described herein or in the prior art.

### Parallel Separation Mode

In a further embodiment of the present invention, methods and protocols are contemplated for simultaneously separating one or more analytes to be separated from a composition of analytes from two or more samples by free flow electrophoresis comprising:
forming a pH function profile between a single anode and a single cathode within a free flow electrophoresis (FFE) chamber , wherein the pH function profile between the anode and the cathode of the FFE chamber comprises N separation zones and N-1 inter-electrode stabilizing media separating each separation zone from each adjacent separation zone(s);
wherein each separation zone comprises a pH separation plateau having a pH which corresponds essentially to the isoelectric point (pI) of each analyte to be separated and having a pH range delimited by an upper pH limit and a lower pH limit, and further comprises a pH function adjacent to the anodic side of the pH separation plateau having an average pH lower than the pH of the pH separation plateau and/or a higher electrical conductivity than the pH separation plateau, and a pH function adjacent to the cathodic side of the pH separation plateau having an average pH greater than the pH of the first pH separation plateau and/or a higher electrical conductivity than the pH separation plateau; wherein the pH separation plateau and the pH function profiles between the cathode and anode are formed by respective buffer systems;
individually introducing each sample comprising an analyte to be separated from a composition of analytes into a separation zone of the FFE chamber, wherein the sample can be introduced into the pH separation plateau, into a zone at the anodic side or into a zone at the cathodic side of said pH separation plateau within said separation zone, and wherein each separation zone comprises a pH separation plateau suitable to separate the analyte to be separated from the composition of analytes in said separation zone; and
eluting the analytes from the FFE chamber, and optionally recovering all or a portion of the analytes in one or a plurality of fractions.

Optionally, the method further comprises identifying the pI of an analyte to be separated from a composition of analytes prior to the electrophoretic separation in case the pI of said analyte is not known.

In one example of this embodiment, two separation zones of a parallel DFE or DSE protocol are formed, each comprising a pH separation plateau, an anodic and a cathodic pH function adjacent to said pH separation plateau. It is readily apparent that the use of the terms anodic and cathodic refers to the relative position of the correspondingly named zone/function or plateau between a given zone, function or plateau and the anode and cathode, respectively. For example, a typical order of introduced media into a FFE chamber (from anode to cathode of a FFE apparatus) will be an anodic stabilizing medium, optionally a focus medium, a medium forming a first pH function or gradient, a medium forming a first pH separation plateau, a medium forming a second pH function or gradient, optionally a medium forming a focus medium, a cathodic inter-electrode stabilizing medium followed by an anodic inter-electrode stabilizing medium, optionally a focus medium, a medium forming the third pH function or gradient, a medium forming a second pH separation plateau, a medium forming a fourth pH function or gradient, optionally a focus medium and a cathodic stabilizing medium. This order can be extended for protocols with more than 2 separation zones. In some embodiments of the present invention, namely for DFE protocols, the inter electrode stabilizing medium can act as a focus medium and therefore the pH function between a pH separation plateau and said inter-electrode stabilizing medium can be removed as shown in Example 3. The separation zones of a parallel FFE separation method are separated by a inter-electrode stabilizing medium having a higher conductivity compared to the adjacent pH functions or pH plateaus. The parallel FFE separation method is thus suitable to simultaneously separate analytes from two or more samples. Each sample is preferably introduced into the formed pH separation plateau within a given separation zone. Optionally, however, a sample may also be introduced into the anodic or cathodic pH function of said separation zone.

N is the number of separation zones within a FFE chamber and will be an integer of 2 or greater, and is essentially only limited by the design of the FFE apparatus, particularly by the number of distinct media inlets. The number of parallel separations will therefore typically be between 2 and 5, but may at least in principle be even greater so that in certain embodiments even 6, 7, 8, 9, 10, 11, 12, 13, 14 or 15 parallel separations may be performed simultaneously between a single anode and cathode in the FFE apparatus. In other words, N is a typically an integer between 2 and 9, preferably between 2 and 7 and most preferably between 2 and 5.

The separation zones utilize either the DFE or DSE separation methodology or a combination thereof. The same media as described above can be used for the parallel separation methods according to the present invention. Thus, it will be apparent to those of skill in the art that the various separation zones may individually incorporate pH functions for 1. DFE and DFE, 2. DFE and DSE, 3. DSE and DFE, and 4. DSE and DSE. Additional combinations such as a first separation zone comprises a (DFE) pH function on one side of the first pH separation plateau and a (DSE) pH gradient on the other side of the first pH separation plateau (or vice versa), and the second separation zone comprises one DFE pH function on one side of the second pH separation plateau and a DSE pH gradient on the other side of the second pH separation plateau (or *vice versa*)*,* and so on, are possible and contemplated herein.

Moreover, dependent on the number of media inlet provided in the FFE apparatus employed for this embodiment of the present invention, it will be possible to increase the number of distinct separation zones within the separation chamber to 3, 4, 5 or even more. As explained above, for DSE type separation zones, 3 media inlets are typically required. In other words, the number of media inlets for providing two distinct DSE separation zones will be 10. Each separation zone comprises 3 inlets. 2 inlets are used for the inter-electrode stabilizing medium (which comprises an anodic and a cathodic inter-electrode stabilizing medium), and one inlet on each side is used to form an anodic stabilizing medium between the first separation zone and the anode, and a cathodic stabilizing medium between the second separation zone and the cathode, respectively. By applying the same principles, providing 3 distinct DSE separation zones, one will require an FFE apparatus having in total at least 15 inlets for all media, including separation media, inter-electrode media and the stabilizing media.

As explained above, the number of distinct DFE separation zones per given number of media inlets can be slightly higher because the inter-electrode stabilizing medium may at the same time function as a focus medium by virtue of its high electrical conductivity. For example, an FFE apparatus having 15 distinct media inlets may comprise 5 pH separation plateaus separated by 4 inter-electrode stabilizing media (2 medium inlets for each) and an anodic and a cathodic stabilizing medium.

With these explanations, other possibilities will be apparent to those of skill in the art. In any case, the parallel separation mode as explained herein does not preclude the use of more than two electrodes, but rather describes embodiments where multiple separation or fractionation zones are disposed and established between one pair of electrodes.

One exemplary embodiment of the parallel separation mode is illustrated in FIG. 7, wherein two distinct separation zones are disposed in a separation chamber of an FFE apparatus (FIG. 7 shows the pH and conductivity profile of the media during electrophoresis). As apparent from FIG. 7 the buffer employed for this embodiment are able to form a pH gradient in the zones adjacent to each separation plateau. In other words, FIG. 7 illustrates a parallel mode separation having two DSE type separation zones.

It will be understood that the parallel mode may be particularly useful in a variety of situations, including the analysis/sample preparation of a large number of specimen samples., e.g., in the clinics. Alternatively, the same, or different, samples may be depleted from different high abundant analytes. For the latter method, the pH of the two or more separation plateaus will typically be chosen so as to be different from the other separation plateaus inside the FFE apparatus.

### Kits and Electrophoretic Media Compositions

It will be apparent to those skilled in the art that the separation media contemplated herein may be selected, prepared and used alone, or, alternatively, together with other stabilizing media, focus media and separation media, respectively.

Accordingly, the present disclosure also includes a kit for carrying out the FFE methods such as DFE or DSE according to embodiments of the present invention, wherein the kit comprises the electrophoretic separation media to carry out the desired method. It will be understood that normally at least three different separation media are required for both, DFE and DSE applications. In this context, it is noted that the two media adjacent to the pH separation plateau may also have properties as stabilizing and/or focus media.

In addition to three or more separation media, a kit for carrying out an FFE separation method of the present invention may further comprise at least one stabilizing medium as defined hereinabove. The stabilizing medium may be a cathodic stabilizing medium or an anodic stabilizing medium. They are generally located between the anode/cathode and the separation medium, respectively.

In one embodiment of the present invention, the stabilizing medium is located between two pH function profiles. Stabilizing media are generally characterized by having an electrical conductivity that is higher than the conductivity in the separation medium. The conductivity may be increased by a factor of 2, preferably a factor of 3 and most preferably a factor greater than 3. The differences in conductivity between the separation media and the stabilizing media is achieved by a variety of ways, for example by adding further electrically conductive ions to the stabilizing media or by increasing the concentration of the buffer compounds in the stabilizing media, as described in further detail herein above.

Although the electrical conductivity of the stabilizing media will be higher than the conductivity of the adjacent separation medium, the pH of the stabilizing media may be greater, nearly equal or even lower than the pH of the adjoining separation medium, depending on the circumstances of the separation problem. The buffer compounds of the stabilizing media can be identical with the buffer compounds of the separation media or can be different.

Since anodic and cathodic stabilization are both particularly useful for successful electrophoretic applications, particularly in FFE, the kit will, in addition to the separation media, preferably comprise one anodic and one cathodic stabilizing medium as defined herein.

In yet other cases, the kit will include all media required for a given electrophoretic separation, i.e., an anodic and a cathodic stabilizing medium, as well as a separation medium (which consists of several sub-fractions as explained above). In such cases, the separation media and stabilizing media will of course be selected so as to be useful for the intended protocol.

The kit may comprise the various media as one or more aqueous solutions that are ready to be used (i.e., all components are present in the desired concentration for the electrophoretic separation problem), or it may contain one or several of the media in the form of a concentrated solution that is to be diluted with a pre-determined amount of solvent prior to their use. Alternatively, the kit may comprise one or several media in dry form or lyophilized form comprising the various ingredients of a medium in several, but preferably in one container, which is then reconstituted with a predetermined amount of solvent prior to its use in an electrophoretic separation process.

It will be understood that all of the preferred separation media described herein, as well as the preferred cathodic and/or anodic stabilizing media and focus media may be included in the kits described herein.

It is generally preferred that each medium (separation medium, cathodic stabilizing medium, anodic stabilizing medium, counter flow medium) will be present in a separate container, although it will be apparent to those of skill in the art that other combinations and packaging options may be possible and useful in certain situations. For example, it has been mentioned above that the separation media for IEF applications may consist of a distinct number of "sub-fractions" having different concentrations of the ingredients (and thereby a different pH) in order to create a pre-formed pH gradient within the electrophoresis apparatus. In one embodiment, the pH of each separation medium used to form the gradient is different. The number of sub-fractions employed in IEF applications will depend on the separation problem, the desired pH span achieved with the separation medium and the electrophoresis apparatus used for the separation. In FFE applications, the apparatus will typically comprise several media inlets (e.g., N=7, 8 or 9 inlets), so that the sub-media creating the separation space within the apparatus may be introduced into at least one to a maximum of N-2 inlets (at least one inlet on each side is usually reserved for a stabilizing medium, if present). The number of separation media, which can be inserted into an apparatus suitable for FFE, is thus typically between 2 and 15, or between 3 and 12, or between 4 and 9.

The separation media in the kit will in some cases form a pH separation plateau and two pH functions flanking said pH separation plateau. In other cases, the separation media will form a pH separation plateau and two pH gradients flanking said pH separation plateau. In yet other cases, combinations of these two methods are possible such as having a pH separation plateau and a pH function (e.g., a pH step) on the anodic side of the plateau and a pH gradient on the cathodic side of the plateau or vice versa. In other cases, the separation media form multiple pH function profiles, i.e., n pH separation plateaus flanked on each side by a pH function or pH gradient, respectively, and wherein the various pH function profiles are separated via an inter-electrode stabilizing medium or zone (which is itself comprised of a cathodic portion and an anodic portion as explained in detail herein above).

The separation media in the kit will be preferably formed by binary buffer systems, comprising only one buffer acid and one buffer base. It is contemplated that all of the separation media described herein, be they preferred or not, may be included in the kits as described herein.

The present invention and its advantages are further illustrated in the following, non-limiting examples.

### Example 1: Separation of human plasma according to a DFE protocol

The example demonstrates the separation of a high abundant protein (human serum albumin, HSA) from a human plasma sample using the gel-free, support matrix free, or carrier- free FFE electrophoresis method using a DFE protocol and an apparatus suitable to carry out said method. Native human plasma is diluted 1:10 with the medium of medium inlet 4 of an apparatus shown in FIG. 1A and injected or introduced via sample inlet 4 into the separation area at a sample load rate of 5 ml/h.

The following media were introduced into the apparatus:
Medium inlets land 2: 100 mM sulfuric acid + 10% glycerol (pH 1,30)
Medium inlet 3: 200 mM 2-amino-butyric acid, 100mM gluconic acid, 50 mM pyridinethanesulfonic acid (PESS), 30 mM glycylglycine, 10% glycerol (pH 3.39)
Medium inlet 4: 30 mM MES, 100 mM glycylglycine, and 10 % glycerol (pH 4.92)
Medium inlet 5: 200 mM MOPSO, 20 mM MES, 100 mM β-alanine, 50 mM BISTRIS, and 10% glycerol, (pH 6.06)
Medium inlets 6 and 7: 100 mM NaOH + 10% glycerol, (pH 11,80)

Optionally, a composition of 10% glycerol in distilled water can be injected or introduced in counterflow to the inlets via a plurality of counterflow inlets, especially during a continuous preparative mode of operation. This optional step may enhance the flow of sample and separation media to their intended outlets, especially when accurate outlet to outlet sample management accuracy is required.

The pH separation plateau is formed by the separation medium introduced through media inlet 4 of an apparatus according to figure FIG 1A. The sample can be introduced through a dedicated sample inlet into the formed pH separation plateau. Optionally, it can be introduced into the anodic or cathodic pH function adjacent to the separation zone defined by separation media introduced through media inlet 3 to 5. The pH functions adjacent to the pH separation plateau are formed by separation media introduced through media inlets 3 and 5. Focus and/or stabilizing media may be introduced through media inlets 1, 2, 6 and 7. Although the buffer composition and therefore the conductivity and pH profile between zone 1 and 2 and 6 and 7 do not vary in this experiment, they may vary if, e.g., a focus medium is introduced into zone 6 and a stabilizing medium is introduced into zone 7.

FIG. 2 shows the effective result of the DFE isoelectric focusing process, wherein three pH pools or fractions have been accumulated via measuring or analyzing the eluted samples collected at the outlets of the fractionation chamber. The pH of each collected sample outlet has been measured, and is shown in FIG. 2 as well as the measured concentrations of pI markers which demonstrate proof of principle and the impact of conductivity "walls."

The separation shown in FIG. 2 was achieved by the use of high conductivity properties of the media adjacent to the depletion zone and by the provision of a pH profile as illustrated in FIGS. 1B and 2.

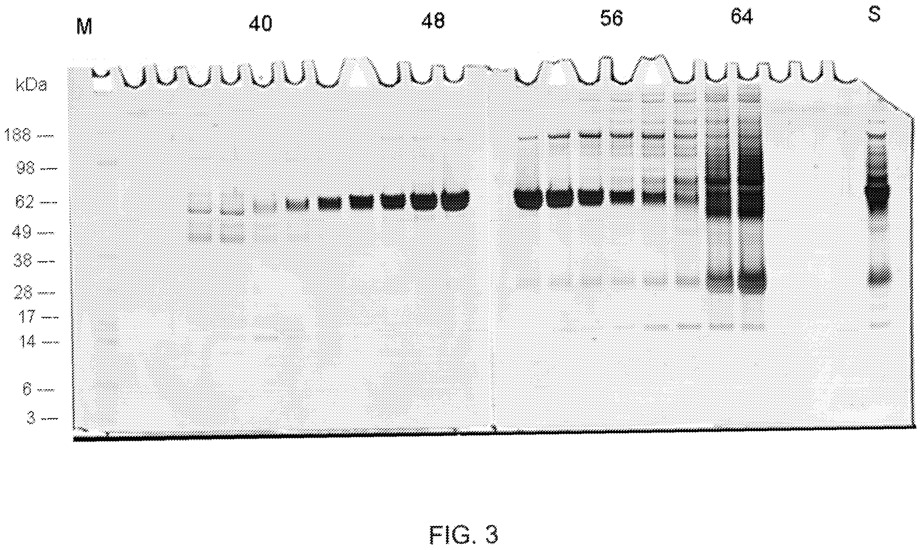

FIG. 3 shows an SDS-PAGE analysis of the fractionated sample according to the DFE protocol described above. Fraction numbers and MW markers are shown. It can be easily seen that albumin (around 66 kDa) was successfully depleted from the fractions corresponding to the depletion zone (the pH separation plateau, termed albumin pool in FIG. 2). Additionally, within the gel fractions that include albumin's pH range, one may observe the existence of a minor part of proteins of different molecular weight than that of albumin, which cannot leave the depletion zone in total due to their very low value of electrophoretic mobility inside the depletion zone.

Since the pI of the pH separation plateau was chosen to correspond to albumin, albumin was maintained in a depletion pool while proteins of a pI outside the pH of the pH separation plateau were collected at the interface between the acidic and alkaline zone and the pH separation plateau, respectively (fractions around 40 and around 60).

The method allows essential separation of any protein that has a pI that allows for it to remain in the pH separation plateau between the upper and lower pH of the plateau. Once the three fractions (pH depletion zone fraction or depletion pool, acidic pool, and alkaline pool) have been collected, the researcher may perform further preparative or analytic operations to all, a portion of or a combination of the fractions in a variety of ways which comprises but is not limited to: electrophoresis such as another FFE separation, or native gel electrophoresis, 1D- or 2D-PAGE, chromatographic techniques, MS or coupled MS, NMR, circular dichroism, IR-spectroscopy, UV-spectroscopy, or biochemical assays such as activity assays, or any combinations thereof.

### Example 2: Separation of human plasma according to a DSE protocol

The example demonstrates the separation of a high abundant protein (human serum albumin, HSA) from a human plasma sample using the gel-free, support matrix free, or carrier-free FFE electrophoresis method using a DSE protocol and an apparatus suitable to carry out said method. Native human plasma is diluted 1:10 with the medium of medium inlet 4 of an apparatus shown in FIG. 4 and injected or introduced via sample inlet 4 into the separation area at a sample load rate of 5 ml/h.

The following media were introduced into the apparatus:
Medium inlet 1: 100 mM sulfuric acid; 10 % glycerol
Medium inlet 2: 100 mM sulfuric acid; 10 % glycerol
Medium inlet 3: 25% BD FFE Separation Buffer 1 + 10 % glycerol
Medium inlet 4: 30 mM MES; 100 mM glygly; 14 % BD FFE Separation Buffer 2; 10% glycerol
Medium inlet 5: 25 % BD FFE Separation Buffer 2 + 10 % glycerol, (pH 6.94)
Medium inlet 6: 150 mM NaOH + 50 mM Ethanolamine, 10 % glycerol
Medium inlet 7: 150 mM NaOH + 50 mM Ethanolamine, 10 % glycerol

Optionally, a composition of 10 % glycerol in distilled water can be injected or introduced in counterflow to the inlets via a plurality of counterflow inlets, especially during a continuous preparative mode of operation. This optional step may enhance the flow of sample and separation media to their intended outlets, especially when accurate outlet to outlet sample management accuracy is required.

The pH separation plateau is formed by the separation medium introduced through media inlet 4 of an apparatus according to FIG 4A. The pH functions adjacent to the pH separation plateau are formed by separation media introduced through media inlets 3 and 5. The sample can be introduced through a dedicated sample inlet into the formed pH separation plateau. Optionally, it can be introduced into the anodic or cathodic pH function adjacent to the pH separation plateau (the separation zone) defined by separation media introduced through media inlet 3 to 5. Focus and/or stabilizing media may be introduced through media inlets 1, 2, 6 and 7. Although the buffer composition and therefore the conductivity and pH profile between zone 1 and 2 and 6 and 7 do not vary in this experiment, they may vary if, e.g., a focus medium is introduced into zone 6 and a stabilizing medium is introduced into zone 7.

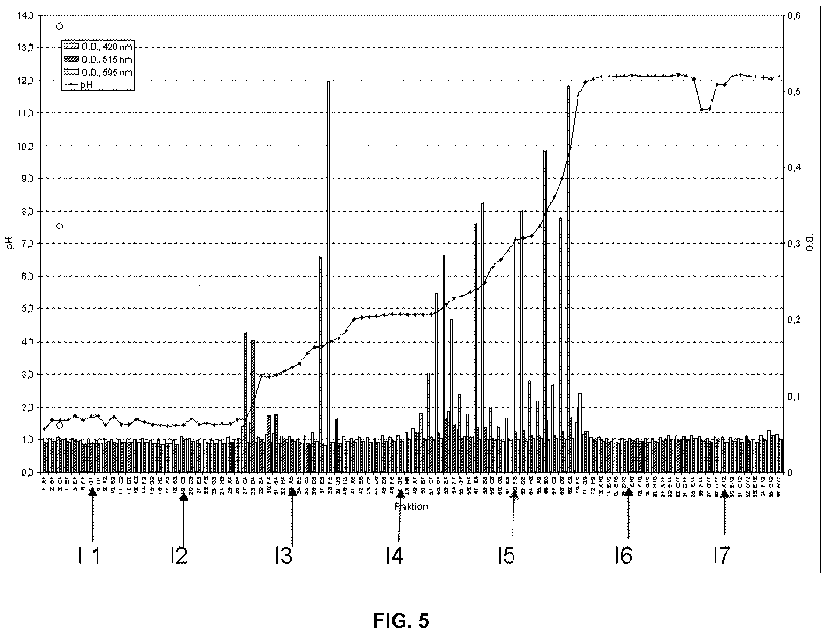

The separation shown in FIG. 5 was achieved by using general isoelectric focusing techniques with specific increase of buffer capacity at the desired depletion pH range. The pH and conductivity profile is shown in FIG. 4B and the pH of the collected fractions, as well as a distribution of (control) pI markers is illustrated in FIG. 6. Moreover, FIG. 6 also indicates the approximate positions of media inlets 1 to 7 relative to the collected fractions. As can be seen from the pherogram shown in FIG. 5, linear pH-profiles from pH 3.5 to 4.7 and pH 5 to 9 were achieved by the setup and media described in this Example. Albumin remained in zone 4 while the migration of charged species that had a pI other than that of zone 4 will migrate towards zones 3 and 5, depending on their specific pI.

FIG. 6 shows an SDS-PAGE analysis of the fractionated sample according to the DSE protocol described above. Fraction numbers and MW markers are also shown. It is apparent that albumin was successfully depleted from the fractions corresponding to the depletion zone (between about fractions 39 to 50). Moreover, a substantial separation of the proteins in the alkaline pool could be observed by applying the DSE protocol described in this Example.

As shown in FIG. 6, the SDS-PAGE lanes of the collected fractions demonstrate how isolating albumin to certain wells enabled the discrimination of proteins of lower concentration that fall outside of the pH range corresponding to the pI of human serum albumin. Additionally, within the gel fractions that include albumin's pH range, one may observe the existence of a minor part of proteins of different molecular weight than that of albumin, which cannot leave the depletion zone in total due to their very low value of electrophoretic mobility inside the depletion zone.

Once all of the separated fractions have been collected, the researcher may perform further preparative operations to all or a portion of the fractions, or optionally may perform an analytical analysis of the samples in a variety of ways which comprises but is not limited to: electrophoresis such as another FFE separation, or native gel electrophoresis, 1D- or 2D-PAGE, chromatographic techniques, MS or coupled MS, NMR, circular dichroism, IR-spectroscopy, UV-spectroscopy, or biochemical assays such as activity assays, or any combinations thereof.

### Example 3: Parallel DFE separation of analytes from two samples

The Example demonstrates the simultaneous separation of high abundant protein (human serum albumin, HSA) from two human plasma samples using the FFE electrophoresis method of the present invention using a modified parallel DFE protocol and an apparatus suitable to carry out said method. The protocol employed for this Example employed, starting from the anode to the cathode, the following media: an anodic stabilization medium, a first separation zone comprising a first pH function and a first pH separation plateau, an inter-electrode stabilizing medium which acts also as a focus medium adjacent to the pH separation plateaus of separation zone 1 and 2, a second separation zone comprising a pH separation plateau and a second pH function and a cathodic stabilization medium.

The first native human plasma sample was diluted 1:10 with the medium of medium inlet 2 and injected or introduced via sample inlet positioned near media inlet 2 into the separation area at a sample load rate of 5 ml/h, whereas the second native human plasma sample was diluted 1:10 with the medium of medium inlet 6 and simultaneously injected or introduced via sample inlet positioned near medium inlet 6 into the separation area at a sample load rate of 5 ml/h.

The following media were introduced into the apparatus:
Anode solution: 100 mM H₂SO₄
Medium inlet 1: 200mM 2-aminobuty1,100mM gluconic acid, 50mM pyridine ethane sulfonic acid (PESS), 30mM glygly; 10 % glycerol
Medium inlet 2: 30mM MES, 100mM glygly; 10 % glycerol
Medium inlet 3 : 200mM MOPSO, 50mM BISTRIS, 20mM MES, 100mM β-alanine; 10 % glycerol
Medium inlet 4 : empty
Medium inlet 5 : 200mM 2-aminobutyl, 100mM gluconic acid, 50 mM PESS, 30mM glygly; 10 % glycerol
Medium inlet 6 : 30mM MES, 100mM glygly; 10 % glycerol
Medium inlet 7 : 200mM MOPSO, 50mM BISTRIS, 20mM MES, 100mM β-alanine; 10 % glycerol
Cathode solution: 100 mM NaOH

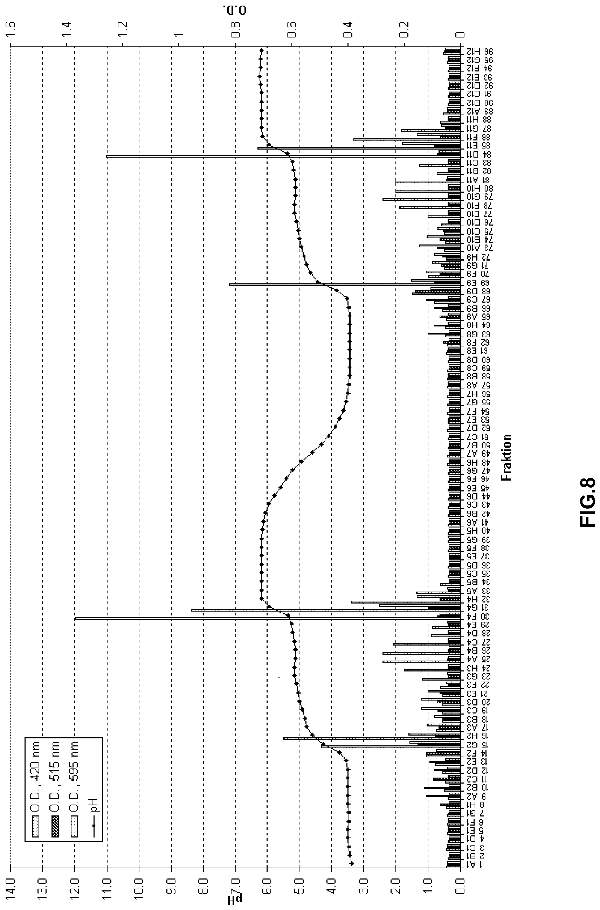

The inter-electrode stabilizing zone was formed by the media of media inlets 3 and 5 wherein BISTRIS and β-alanine are the bases and gluconic acid and PESS are the acids with a sufficiently low electrophoretic mobility to form a suitable inter-electrode stabilizing zone. As can be seen from FIG. 8, the inter-electrode stabilizing medium of the present modified parallel DFE protocol acts also as a focus medium for the pH separation plateaus of separation zone 1 and 2. Optionally, pH functions can be placed between the inter-electrode stabilizing medium and the pH separation plateaus. For a parallel DSE protocol as shown in FIG. 7, media forming suitable pH gradients between the pH separation plateaus and the inter-electrode separation medium are necessary.

Optionally, a composition of 10 % glycerol in distilled water can be injected or introduced in counterflow to the inlets via a plurality of counterflow inlets, especially during a continuous preparative mode of operation. This optional step may enhance the flow of sample and separation media to their intended outlets, especially when accurate outlet to outlet sample management accuracy is required.

The separation shown in FIG. 8 was achieved by using the modified parallel DFE protocol. The pH of the collected fractions, as well as a distribution of (control) pI markers is illustrated in FIG. 8. Albumin remained in zone 2 and zone 6 respectively while the migration of charged species that had a pI other than that of zone 2 or 6 will migrate towards zones 1 and 3, or zone 5 and 7 respectively, depending on their specific pI.

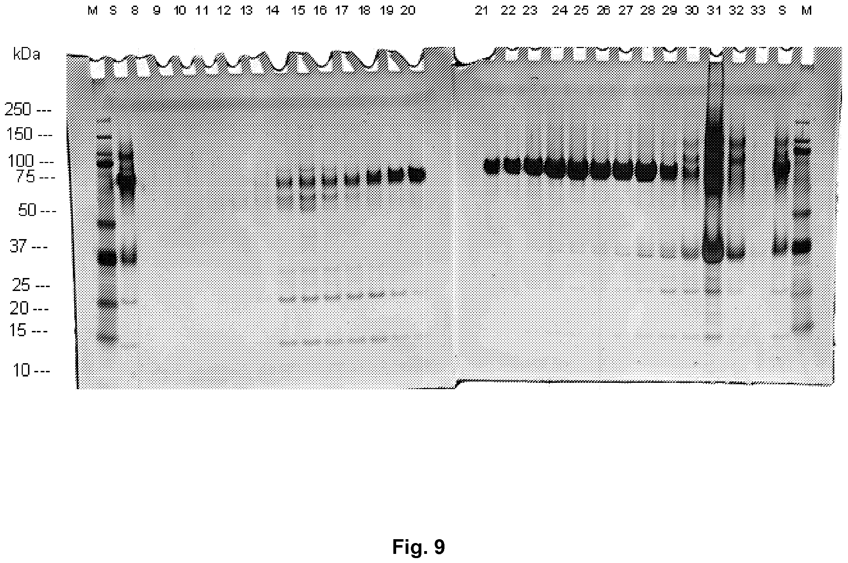

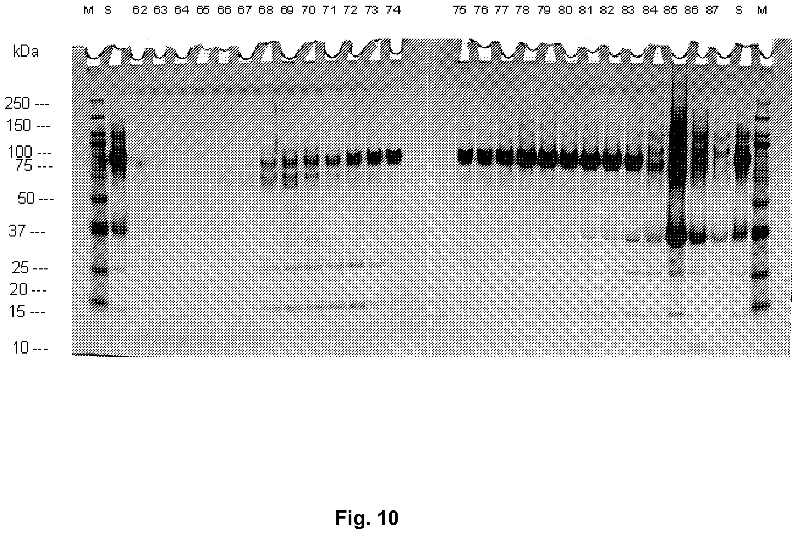

FIGs. 9 and 10 show the SDS-PAGE analysis of the fractionated sample according to the modified DFE protocol described above. Fraction numbers and MW markers are also shown. Since the pI of the pH separation plateaus were chosen to correspond to albumin, albumin was maintained in a depletion pool (the pH separation plateau). It is apparent that albumin was successfully depleted from proteins of a pI outside the pH of the pH separation plateau, which were collected in acidic pools (fractions 13 to 16 (separation zone 1) and fractions 68 to 71 (separation zone 2)) and alkaline pools (fractions 30 to 33 (separation zone 1) and fractions 84 to 87 (separation zone 2)) at the interface between the pH separation plateaus and the adjacent pH function or inter-electrode stabilizing medium, which also acted as a focus medium in this set-up.

As evidenced by the SDS-PAGE gels shown in FIGs. 9 and 10, within the gel fractions that include albumin's pH range, the existence of a minor part of proteins of different molecular weight than that of albumin, which cannot leave the depletion zone in total due to their very low value of electrophoretic mobility inside the depletion zone could be observed.

Once fractions have been collected (pH separation plateau (depletion zone) fractions, acidic pool fractions, and alkaline pool fractions), the researcher may perform further preparative or analytic operations to all, a portion of or a combination of the fractions in a variety of ways which comprises but is not limited to: electrophoresis such as another FFE separation, or native gel electrophoresis, 1D- or 2D-PAGE, chromatographic techniques, MS or coupled MS, NMR, circular dichroism, IR-spectroscopy, UV-spectroscopy, or biochemical assays such as activity assays, or any combinations thereof

## Claims

1. A method for separating an analyte to be separated from a composition of analytes by free flow isoelectric focusing comprising:
forming within a free flow electrophoresis (FFE) chamber a pH function profile between an anode and a cathode, comprising
a pH separation plateau which average pH corresponds essentially to the isoelectric point (pi) of an analyte to be separated and which has a pH range delimited by an upper pH limit and a lower pH limit;
a pH function between the anode and the pH separation plateau having an average pH lower than the pH of the pH separation plateau or a higher electrical conductivity than the pH separation plateau, or both a lower average pH and a higher electrical conductivity than the pH separation plateau; and
a pH function between the cathode and the pH separation plateau having an average pH greater than the pH of the pH separation plateau or a higher electrical conductivity than the pH separation plateau, or both a greater average pH and a higher electrical conductivity than the pH separation plateau;
wherein the pH separation plateau and the pH function profiles between the cathode and anode are formed by respective buffer systems;
introducing a sample comprising an analyte having a defined pi to be separated from a mixture of analytes into the FFE chamber wherein the sample can be introduced in the pH separation plateau, in a zone at the anodic side or in a zone at the cathodic side of said pH separation plateau; and
eluting the analytes from the FFE chamber, and optionally recovering all or a portion of the analytes in one or a plurality of fractions;
optionally wherein the method further comprises identifying the pi of an analyte to be separated from a composition of analytes prior to the electrophoretic separation in case the pi of said analyte is not known.

2. The method of claim 1, wherein said method
produces at least one non-depleted sample portion and a sample portion comprising the analyte separated on the pH separation plateau from the non-depleted sample portion; and wherein said method further comprises
subsequently analyzing one or more fractions eluted from the FFE chamber.

3. The method of claim 2, wherein the fraction to be analyzed contains at least one analyte of at least one non-depleted sample portion.

4. The method of any one of claims 1 to 3, wherein the pH function profile comprises
a pH gradient adjacent to the anodic side of the pH separation plateau spanning at least 0.5 pH units; or
a pH gradient adjacent to the cathodic side of the pH separation plateau spanning at least 0.5 pH units; or
a pH gradient adjacent to the anodic side of the pH separation plateau spanning at least 0.5 pH units and a pH gradient adjacent to the cathodic side of the pH separation plateau spanning at least 0.5 pH units.

5. The method of any one of claims 1 to 3, wherein the pH function profile comprises a pH separation plateau, flanked on the anodic side by a pH gradient and on the cathodic side by a pH plateau; or
wherein the pH function profile comprises a pH separation plateau, flanked on the anodic side by a pH plateau and on the cathodic side by a pH gradient.

6. The method of any one of the preceding claims, wherein the pH function profile comprises at least one focus medium and wherein the conductivity of said focus medium is at least about 2-fold higher, preferably about 3-fold higher and more preferably at least 5-fold higher than the conductivity of a medium forming a pH function or a pH separation plateau.

7. The method of claim 6, wherein the at least one focus medium is disposed adjacent to a medium forming a pH function, wherein the pH function is adjacent to a pH separation plateau.

8. The method of any one of claims 2 to 7, wherein a subsequent analysis includes a technique chosen from the group of free flow electrophoresis, gel electrophoresis, 1D- and 2D-PAGE, MS, MALDI, ESI, SELDI, LC-MS(/MS), MALDI-TOF-MS(/MS), chemiluminescence, HPLC, Edman sequencing, NMR spectroscopy, X-ray diffraction, nucleic acid sequencing, electroblotting, amino acid sequencing, flow cytometry, circular dichroism, or any combination thereof.

9. The method of any one of claims 2 to 8, wherein one or more analytes eluted from the FFE chamber after the separation by isoelectric focusing, less the analyte eluted from the pH separation plateau, are recovered and at least partially subjected to gel electrophoresis, mass spectrometry, or a combination thereof.

10. The method of any one of the preceding claims, wherein at least one analyte from the non-depleted sample portion is a biomarker.

11. The method of any one of the preceding claims, wherein the analyte to be separated is a protein selected from the group consisting of albumin, alpha-1-antitrypsin, transferrin, haptoglobulin, casein, myosin and actin, preferably wherein the protein is albumin.

12. The method of claim 11, wherein the free flow isoelectric focusing separation is carried out under native conditions and wherein the pH of the pH separation plateau ranges between pH 4.7 and pH 5.0, more preferably between pH 4.8 and pH 4.9; or
wherein the free flow isoelectric focusing separation is carried out under denaturing conditions and wherein the pH of the pH separation plateau ranges between pH 6.2 and pH 6.5, more preferably between pH 6.3 and pH 6.4; or
wherein the free flow isoelectric focusing separation is carried out under denaturing conditions and wherein the analyte of interest is reduced and alkylated and wherein the pH of the pH separation plateau ranges between pH 5.9 and pH 6.2, more preferably between pH 5.9 and pH 6.1.

13. The method of claim 1, wherein the method allows for simultaneously separating one or more analytes to be separated from a composition of analytes from two or more samples by free flow isoelectric focusing comprising:
forming a pH function profile between a single anode and a single cathode within a free flow electrophoresis (FFE) chamber, wherein the pH function profile between the anode and the cathode of the FFE chamber comprises N separation zones and N-1 inter-electrode stabilizing media separating each separation zone from each adjacent separation zone(s);
wherein each separation zone comprises a pH function profile as defined in any one of claims 1 to 7 or 12;
and further wherein each separation zone comprises a pH separation plateau suitable to separate the analyte to be separated from the composition of analytes in said separation zone;
individually introducing each sample comprising an analyte to be separated from a composition of analytes into a separation zone of the FFE chamber,
and
eluting the analytes from the FFE chamber;
optionally further comprising recovering all or a portion of the analytes in one or a plurality of fractions.

14. The method of claim 13, wherein N is an integer between 2 and 9.

15. The method of claim 13 or claim 14, wherein
the anodic inter-electrode stabilizing medium comprises a monoprotic acid; or
the cathodic inter-electrode stabilizing medium comprises a monobasic base; or
the anodic inter-electrode stabilizing medium comprises a monoprotic acid and the cathodic inter-electrode stabilizing medium comprises a monobasic base.

## Patentansprüche

1. Verfahren zum Abtrennen eines aus einer Zusammensetzung von Analyten abzutrennenden Analyten durch Free-Flow isoelektrische Fokussierung , umfassend:
Bilden eines pH-Wert-Funktionsprofils zwischen einer Anode und einer Kathode innerhalb einer Free-Flow-Elektrophoresekammer (FFE), umfassend
ein pH-Wert-Trennplateau, dessen durchschnittlicher pH-Wert im Wesentlichen dem isoelektronischen Punkt (pI) eines abzutrennenden Analyten entspricht und welches einen durch ein oberes pH-Wertlimit und ein unteres pH-Wertlimit abgegrenzten pH-Wertbereich aufweist;
eine pH-Wert-Funktion zwischen der Anode und dem pH-Wert-Trennplateau, mit einem durchschnittlichen pH-Wert niedriger als der pH-Wert des pH-Wert-Trennplateaus oder einer höheren elektrischen Leitfähigkeit als das pH-Wert-Trennplateau, oder sowohl einem niedrigeren durchschnittlichen pH-Wert als auch einer höheren elektrischen Leitfähigkeit als das pH-Wert-Trennplateau; und
eine pH-Wert-Funktion zwischen der Kathode und dem pH-Wert-Trennplateau mit einem durchschnittlichen pH-Wert größer als der pH-Wert des pH-Wert-Trennplateaus oder einer höheren elektrischen Leitfähigkeit als das pH-Wert-Trennplateau, oder sowohl einem größeren durchschnittlichen pH-Wert als auch einer höheren elektrischen Leitfähigkeit als das pH-Wert-Trennplateau; und
wobei das pH-Wert-Trennplateau und die pH-Wert-Funktionsprofile zwischen der Kathode und Anode durch jeweilige Puffersysteme gebildet werden;
Einführen einer Probe, umfassend einen aus einer Mischung von Analyten abzutrennenden Analyten mit einem definierten pI, in die FFE-Kammer, wobei die Probe in das pH-Wert-Trennplateau, in eine Zone auf der anodischen Seite oder in eine Zone auf der kathodischen Seite des pH-Wert-Trennplateaus eingeführt werden kann; und
Eluieren der Analyten aus der FFE-Kammer, und optional Rückgewinnen aller oder eines Teils der Analyten in einer oder einer Vielzahl von Fraktionen;
optional wobei das Verfahren, im Fall dass der pI des Analyten nicht bekannt ist, ferner das Identifizieren des pI eines aus einer Zusammensetzung von Analyten abzutrennenden Analyten vor der elektrophoretischen Trennung umfasst.

2. Verfahren nach Anspruch 1, wobei das Verfahren
mindestens einen nicht abgereicherten Probenteil und einen den auf dem pH-Wert-Trennplateau von dem nicht abgereicherten Probenteil abgetrennten Analyten umfassenden Probenteil produziert; und wobei das Verfahren ferner
nachfolgendes Analysieren einer oder mehrerer aus der FFE-Kammer eluierten Fraktionen umfasst.

3. Verfahren nach Anspruch 2, wobei die zu analysierende Fraktion mindestens einen Analyten von mindestens einem nicht abgereicherten Probenteil enthält.

4. Verfahren nach einem der Ansprüche 1 bis 3, wobei das pH-Wert-Funktionsprofil Folgendes umfasst:
einen der anodischen Seite des pH-Wert-Trennplateaus benachbarten pH-Wert-Gradienten, umspannend mindestens 0,5 pH-Wert-Einheiten; oder
einen der kathodischen Seite des pH-Wert-Trennplateaus benachbarten pH-Wert-Gradienten, umspannend mindestens 0,5 pH-Wert-Einheiten; oder
einen der anodischen Seite des pH-Wert-Trennplateaus benachbarten pH-Wert-Gradienten, umspannend mindestens 0,5 pH-Wert-Einheiten und einen der kathodischen Seite des pH-Wert-Trennplateaus benachbarten pH-Wert-Gradienten, umspannend mindestens 0,5 pH-Wert-Einheiten.

5. Verfahren nach einem der Ansprüche 1 bis 3, wobei das pH-Wert-Funktionsprofil ein pH-Wert-Trennplateau umfasst, auf der anodischen Seite durch einen pH-Wert-Gradienten und auf der kathodischen Seite durch ein pH-Wert-Plateau flankiert; oder
wobei das pH-Wert-Funktionsprofil ein pH-Wert-Trennplateau umfasst, auf der anodischen Seite durch einen pH-Wert-Plateau und auf der kathodischen Seite durch einen pH-Wert-Gradienten flankiert.

6. Verfahren nach einem der vorstehenden Ansprüche, wobei das pH-Wert-Funktionsprofil mindestens ein Fokussiermedium umfasst und wobei die Leitfähigkeit des Fokussiermediums mindestens 2 Mal höher, vorzugsweise etwa 3 Mal höher und mehr bevorzugt mindestens 5 Mal höher ist als die Leitfähigkeit eines eine pH-Wert-Funktion oder ein pH-Wert-Trennplateau bildenden Mediums.

7. Verfahren nach Anspruch 6, wobei das mindestens eine Fokussiermedium einem eine pH-Wert-Funktion bildendem Medium benachbart angeordnet ist, wobei die pH-Wert-Funktion einem pH-Wert-Trennplateau benachbart ist.

8. Verfahren nach einem der Ansprüche 2 bis 7, wobei eine nachfolgende Analyse eine Technik einschließt, gewählt aus der Gruppe von Free-Flow-Elektrophorese, Gelelektrophorese, 1D- und 2D-PAGE, MS, MALDI, ESI, SELDI, LC-MS(/MS), MALDI-TOF-MS(/MS), Chemilumineszenz, HPLC, Edman-Sequenzierung, NMR-Spektroskopie, Röntgenbeugung, Nukleinsäuresequenzierung, Elektroblotting, Aminosäuresequenzierung, Durchflusszytometrie, Circulardichroismus oder eine beliebige Kombination davon.

9. Verfahren nach einem der Ansprüche 2 bis 8, wobei einer oder mehrere der aus der FFE-Kammer nach der Trennung durch isoelektrisches Fokussieren eluierten Analyten, weniger der aus dem pH-Wert-Trennplateau eluierte Analyt, zurückgewonnen und mindestens teilweise einer Gelelektrophorese, Massenspektrometrie oder einer Kombination davon unterworfen werden.

10. Verfahren nach einem der vorstehenden Ansprüche, wobei mindestens ein Analyt aus dem nicht abgereicherten Probenteil ein Biomarker ist.

11. Verfahren nach einem der vorstehenden Ansprüche, wobei der abzutrennende Analyt ein Protein ist, ausgewählt aus der Gruppe, bestehend aus Albumin, alpha-1-Antitrypsin, Transferrin, Haptoglobulin, Casein, Myosin und Actin, vorzugsweise wobei das Protein Albumin ist.

12. Verfahren nach Anspruch 11, wobei die Free-Flow isoelektrische Fokussierungstrennung unter nativen Bedingungen durchgeführt wird und wobei der pH-Wert des pH-Wert-Trennplateaus im Bereich zwischen pH 4,7 und pH 5,0, mehr bevorzugt zwischen pH 4,8 und pH 4,9 liegt; oder
wobei die Free-Flow isoelektrische Fokussierungstrennung unter denaturierenden Bedingungen durchgeführt wird und wobei der pH-Wert des pH-Wert-Trennplateaus im Bereich zwischen pH 6,2 und pH 6,5, mehr bevorzugt zwischen pH 6,3 und pH 6,4 liegt; oder
wobei die Free-Flow isoelektrische Fokussierungstrennung unter denaturierenden Bedingungen durchgeführt wird und wobei der Analyt von Interesse reduziert und alkyliert wird und wobei der pH-Wert des pH-Wert-Trennplateaus im Bereich zwischen pH 5,9 und pH 6,2, mehr bevorzugt zwischen pH 5,9 und pH 6,1 liegt.

13. Verfahren nach Anspruch 1, wobei das Verfahren das gleichzeitige Abtrennen von einem oder mehreren aus einer Zusammensetzung von Analyten abzutrennenden Analyten aus zwei oder mehreren Proben durch Free-Flow isoelektrisches Fokussieren erlaubt, Folgendes umfassend:
Bilden eines pH-Wert-Funktionsprofils zwischen einer einzelnen Anode und einer einzelnen Kathode innerhalb einer Free-Flow Elektrophoresekammer (FFE), wobei das pH-Wert-Funktionsprofil zwischen der Anode und der Kathode der FFE-Kammer N Trennzonen und N-1 stabilisierende Zwischenelektrodenmedien, jede Trennzone von jeder benachbarten Trennzone(n) trennend, umfasst;
wobei jede Trennzone jeweils ein pH-Wert-Funktionsprofil zwischen einer Anodenseite und einer Kathodenseite umfasst, wie in einem der Ansprüche 1 bis 7 oder 12 definiert;
und ferner wobei jede Trennzone ein pH-Wert-Trennplateau umfasst, das geeignet ist, den aus der Zusammensetzung von Analyten abzutrennenden Analyten in der Trennzone abzutrennen;
einzelnes Einführen jeder einen aus einer Zusammensetzung von Analyten abzutrennenden Analyten umfassenden Probe in eine Trennzone der FFE-Kammer,
und
Eluieren der Analyten aus der FFE-Kammer;
optional ferner umfassend ein Rückgewinnen aller oder eines Teils der Analyten in einer oder einer Vielzahl von Fraktionen.

14. Verfahren nach Anspruch 13, wobei N eine ganze Zahl zwischen 2 und 9 ist.

15. Verfahren nach Anspruch 13 oder Anspruch 14, wobei
das anodische stabilisierende Zwischenelektrodenmedium eine monoprotische Säure umfasst; oder
das kathodische stabilisierende Zwischenelektrodenmedium eine monobasische Base umfasst; oder
das anodische stabilisierende Zwischenelektrodenmedium eine monoprotische Säure umfasst und das kathodische stabilisierende Zwischenelektrodenmedium eine monobasische Base umfasst.

## Revendications

1. Procédé de séparation d'un analyte à séparer d'une composition d'analytes par électrofocalisation en veine liquide, comprenant :
la formation au sein d'une chambre d'électrophorèse en veine liquide (FFE) d'un profil de fonction de pH entre une anode et une cathode, comprenant
un plateau de séparation de pH dont le pH moyen correspond essentiellement au point isoélectrique (pI) d'un analyte à séparer et qui a une gamme de pH délimitée par une limite supérieure de pH et une limite inférieure de pH ;
une fonction de pH entre l'anode et le plateau de séparation de pH possédant un pH moyen inférieur au pH du plateau de séparation de pH ou une conductivité électrique plus élevée que le plateau de séparation de pH, ou à la fois un pH moyen inférieur et une conductivité électrique plus élevée que le plateau de séparation de pH ; et
une fonction de pH entre la cathode et le plateau de séparation de pH possédant un pH moyen supérieur au pH du plateau de séparation de pH ou une conductivité électrique plus élevée que le plateau de séparation de pH, ou à la fois un pH moyen supérieur et une conductivité électrique plus élevée que le plateau de séparation de pH ;
dans lequel le plateau de séparation de pH et les profils de fonction de pH entre la cathode et l'anode sont formés par des systèmes de tampon respectifs ;
l'introduction d'un échantillon comprenant un analyte ayant un pI défini à séparer d'un mélange d'analytes dans la chambre de FFE, dans lequel l'échantillon peut être introduit dans le plateau de séparation de pH, dans une zone au niveau du côté anodique ou dans une zone au niveau du côté cathodique dudit plateau de séparation de pH ; et
l'élution des analytes à partir de la chambre de FFE, et éventuellement la récupération de la totalité ou d'une partie des analytes dans une ou une pluralité de fractions ;
éventuellement où le procédé comprend en outre l'identification du pI d'un analyte à séparer d'une composition d'analytes avant la séparation par électrophorèse dans le cas où le pI dudit analyte n'est pas connu.

2. Procédé selon la revendication 1, où ledit procédé
produit au moins une partie d'échantillon non appauvrie et une partie d'échantillon comprenant l'analyte séparé sur le plateau de séparation de pH de la partie d'échantillon non appauvrie ; et où ledit procédé comprend en outre
l'analyse ultérieure d'une ou plusieurs fractions éluées de la chambre de FFE.

3. Procédé selon la revendication 2, dans lequel la fraction à analyser contient au moins un analyte d'au moins une partie d'échantillon non appauvrie.

4. Procédé selon l'une quelconque des revendications 1 à 3, dans lequel le profil de fonction de pH comprend
un gradient de pH adjacent au côté anodique du plateau de séparation de pH couvrant au moins 0,5 unité de pH ; ou
un gradient de pH adjacent au côté cathodique du plateau de séparation de pH couvrant au moins 0,5 unité de pH ; ou
un gradient de pH adjacent au côté anodique du plateau de séparation de pH couvrant au moins 0,5 unité de pH et un gradient de pH adjacent au côté cathodique du plateau de séparation de pH couvrant au moins 0,5 unité de pH.

5. Procédé selon l'une quelconque des revendications 1 à 3, dans lequel le profil de fonction de pH comprend un plateau de séparation de pH, bordé sur le côté anodique par un gradient de pH et sur le côté cathodique par un plateau de pH ; ou
dans lequel le profil de fonction de pH comprend un plateau de séparation de pH, bordé sur le côté anodique par un plateau de pH et sur le côté cathodique par un gradient de pH.

6. Procédé selon l'une quelconque des revendications précédentes, dans lequel le profil de fonction de pH comprend au moins un milieu de focalisation et dans lequel la conductivité dudit milieu de focalisation est au moins environ 2 fois plus élevée, de préférence environ 3 fois plus élevée et plus préférablement au moins 5 fois plus élevée que la conductivité d'un milieu formant une fonction de pH ou un plateau de séparation de pH.

7. Procédé selon la revendication 6, dans lequel ledit au moins un milieu de focalisation est disposé adjacent à un milieu formant une fonction de pH, dans lequel la fonction de pH est adjacente à un plateau de séparation de pH.

8. Procédé selon l'une quelconque des revendications 2 à 7, dans lequel une analyse ultérieure comprend une technique choisie parmi le groupe constitué d'électrophorèse en veine liquide, électrophorèse sur gel, PAGE 1D et 2D, spectrométrie de masse (MS), désorption-ionisation laser assistée par matrice (MALDI), ionisation par électronébuliseur (ESI), désorption-ionisation laser activée par une surface (SELDI), couplage de chromatographie en phase liquide et spectrométrie de masse (LC-MS(/MS)), spectrométrie de masse à temps de vol par désorption/ionisation laser assistée par matrice (MALDI-TOF-MS(/MS)), chimiluminescence, chromatographie liquide haute performance (HPLC), séquençage d'Edman, spectroscopie RMN, diffraction des rayons X, séquençage d'acides nucléiques, électrobuvardage, séquençage d'acides aminés, cytométrie en flux, dichroïsme circulaire, ou n'importe quelle combinaison de ceux-ci.

9. Procédé selon l'une quelconque des revendications 2 à 8, dans lequel un ou plusieurs analytes élués de la chambre de FFE après la séparation par électrofocalisation, moins l'analyte élué du plateau de séparation de pH, sont récupérés et au moins partiellement soumis à une électrophorèse sur gel, une spectrométrie de masse, ou une combinaison de ceux-ci.

10. Procédé selon l'une quelconque des revendications précédentes, dans lequel au moins un analyte provenant de la partie d'échantillon non appauvrie est un biomarqueur.

11. Procédé selon l'une quelconque des revendications précédentes, dans lequel l'analyte à séparer est une protéine choisie dans le groupe constitué d'albumine, alpha-1-antitrypsine, transferrine, haptoglobuline, caséine, myosine et actine, de préférence dans lequel la protéine est l'albumine.

12. Procédé selon la revendication 11, dans lequel la séparation par électrofocalisation en veine liquide est effectuée dans des conditions natives et dans lequel le pH du plateau de séparation de pH est compris entre pH 4,7 et pH 5,0, mieux encore entre pH 4,8 et pH 4,9 ; ou
dans lequel la séparation par électrofocalisation en veine liquide est effectuée dans des conditions dénaturantes et dans lequel le pH du plateau de séparation de pH est compris entre pH 6,2 et pH 6,5, mieux encore entre pH 6,3 et pH 6,4 ; ou
dans lequel la séparation par électrofocalisation en veine liquide est effectuée dans des conditions dénaturantes et dans lequel l'analyte d'intérêt est réduit et alkylé et dans lequel le pH du plateau de séparation de pH est compris entre pH 5,9 et pH 6,2, mieux encore entre pH 5,9 et pH 6,1.

13. Procédé selon la revendication 1, où le procédé permet la séparation simultanée d'un ou plusieurs analytes à séparer d'une composition d'analytes à partir de deux échantillons ou plus par électrofocalisation en veine liquide comprenant :
la formation d'un profil de fonction de pH entre une anode unique et une cathode unique au sein d'une chambre d'électrophorèse en veine liquide (FFE), dans lequel le profil de fonction de pH entre l'anode et la cathode de la chambre de FFE comprend N zones de séparation et N-1 milieux de stabilisation entre électrodes séparant chaque zone de séparation de chaque zone de séparation adjacente ;
dans lequel chaque zone de séparation comprend un profil de fonction de pH entre respectivement un côté anodique et un côté cathodique tel que défini dans l'une quelconque des revendications 1 à 7 ou 12;
et dans lequel en outre chaque zone de séparation comprend un plateau de séparation de pH approprié pour séparer l'analyte à séparer de la composition d'analytes dans ladite zone de séparation ;
l'introduction individuelle de chaque échantillon comprenant un analyte à séparer d'une composition d'analytes dans une zone de séparation de la chambre de FFE,
et
l'élution des analytes à partir de la chambre de FFE ;
comprenant en outre éventuellement la récupération de la totalité ou d'une partie des analytes dans une ou une pluralité de fractions.

14. Procédé selon la revendication 13, dans lequel N est un nombre entier compris entre 2 et 9.

15. Procédé selon la revendication 13 ou la revendication 14, dans lequel
le milieu de stabilisation anodique entre électrodes comprend un monoacide ; ou
le milieu de stabilisation cathodique entre électrodes comprend une monobase ; ou
le milieu de stabilisation anodique entre électrodes comprend un monoacide et le milieu de stabilisation cathodique comprend une monobase.
